(19) Europäisches Patentamt
European Patent Office
Office européen des brevets

(11) Publication number: **0 167 223**
**B1**

(12) **EUROPEAN PATENT SPECIFICATION**

(45) Date of publication of patent specification: **01.06.88**

(51) Int. Cl.$^4$: **C 09 J 3/14,** C 08 F 291/00, C 08 F 220/00

(21) Application number: **85301966.9**

(22) Date of filing: **21.03.85**

(54) **Structural adhesive compositions, three component redox catalyst systems and their use in bonding metal surfaces together.**

(30) Priority: **29.05.84 US 614748**

(43) Date of publication of application:
**08.01.86 Bulletin 86/02**

(45) Publication of the grant of the patent:
**01.06.88 Bulletin 88/22**

(84) Designated Contracting States:
**AT BE CH IT LI NL SE**

(58) References cited:
**GB-A-2 060 660**

(73) Proprietor: **LORD CORPORATION**
**2000 West Grandview Boulevard P.O. Box 10038**
**Erie Pennsylvania 16514-0038 (US)**

(72) Inventor: **Zalucha, Denis Jerome**
**R.D. 1, French Creek Road Waterford**
**Erie Pennsylvania (US)**
Inventor: **Bennett, Ruth Marie**
**7231 Footemill Road**
**Erie Pennsylvania (US)**

(74) Representative: **Pearce, Anthony Richmond et al**
**MARKS & CLERK Alpha Tower Suffolk Street**
**Queensway Birmingham B1 1TT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 167 223 B1

**Description**

Field of the invention

The present invention relates to structural adhesive compositions. More particularly, the invention relates to equal mix, multi-pack acrylic structural adhesive compositions which are particularly useful for bonding metal substrates.

Structural adhesive compositions, such as anaerobic and non-anaerobic acrylic, urethane, epoxy and cyanoacrylate adhesives, are well known articles of commerce which are extensively used commercially for bonding metal and plastic materials. The load-bearing and stress-relieving properties of structural adhesives, as well as their bond strength, which can exceed the strength of the engineering materials which are being bonded, make these adhesives attractive alternatives to or replacements for mechanical methods, such as riveting or spot welding, of joining engineering materials, especially where it is preferable to distribute load stresses over larger areas rather than to concentrate such stresses at a few points. Their use can reduce or eliminate costly finishing operations necessitated by mechanical joining methods, present a more pleasing exterior and at least reduce the possibility of corrosion of assemblies containing one or more metal components. Additionally, they can be used to bond a diversity of metals without extensive surface preparation. For example, Zalucha et al U.S.A. Patent 4,223,115 and Briggs et al U.S.A. Patent 3,890,407 disclose acrylic structural adhesive compositions which are effective bonding materials for oily metal surfaces.

Among the different types of structural adhesives, the acrylic structural adhesives are extremely attractive because they provide very strong bonds with both plastic and metal materials, even though a particular adhesive may not have the capability of bonding both types of materials. The acrylic structural adhesives typically comprise a mixture of one or more olefinically-unsaturated reactive monomers and curing agents, with cure being effected through a free radical polymerization mechanism. The adhesives preferably contain one or more polymeric materials which may or may not be reactive, that is, capable of being polymerized *per se* or at least capable of interpolymerizing with the reactive monomers, such as grafting onto or crosslinking the growing polymers from the reactive monomer polymerization. In addition, the adhesives can contain other additives for improving adhesion to substrate materials, environmental resistance, impact resistance, flexibility, heat resistance and the like. However, despite their many advantages, the acrylic structural adhesives do have certain characteristics which have tended to inhibit more widespread usage. Among these characteristics are an unpleasant odor, a low flash point which imposes undesirable restrictions on shipping and handling of the adhesives, a disparate mix ratio which presents problems with respect to accuracy in and compatibility with machine dispensing and a cure time which is incompatible, that is, either too slow or too fast, with many applications. While it has been possible to overcome one or more of these negatives with some measure of success, such efforts have always been left with at least one undesirable characteristic.

During the course of extensive investigations directed to the problems of odor, flash point, mix ratio and cure rate, it became evident that a new curing agent was a necessity, particularly if the room temperature cure capability of the adhesives were to be maintained. It became equally evident that just providing an equal mix adhesive would require a new curing agent, if the performance characteristics of the disparate mix acrylic adhesives were to be equalled.

In accordance with the present invention, there are now provided two-part acrylic structural adhesive compositions wherein the separate parts can be admixed in equal amounts, by volume or weight, and which provide performance characteristics which equal or surpass those of the previously known disparate mix two-part acrylic adhesive compositions, such as those disclosed in GB—A—2060660 in which an organic peroxide, hydroperoxide, perester, or peracid is used as a free radical source and a pyrazolidine compound is used as an essential component of an actuator composition. The two-pack acrylic adhesive compositions of the invention are unexpectedly tolerable to wide variations in mix ratio, that is, the adhesives are curable at mix ratios other than unity (as well as at unity) with no substantial loss in adhesion performance, thus reducing the need for constant calibration of mixing orifices. In addition, the adhesive compositions of the invention allow the formulator to more successfully address the problems of odor, flash point and cure rate in his attempts to more fully meet the needs of his customers. The invention also provides a novel, three-component oxidation-reduction catalyst system comprising from 0.05 to 10, preferably 0.2 to 3, most preferably 0.5 to 1.5 parts by weight of at least one organic hydroperoxide; from 0.005 to 2, preferably 0.05 to 1, most preferably 0.1 to 0.5, parts by weight of at least one organic thiol; and from 0.005 to 1, preferably 0.01 to 0.5, most preferably 0.01 to 0.25 parts by weight of at least one inorganic or organic compound of a metal having a standard reduction potential in the range from +0.9 to −0.5.

More particularly, there are provided novel two-part acrylic structural adhesive compositions comprising at least one olefinically unsaturated reactive monomer and a three component curing agent comprising at least one peroxygen compound selected from the group consisting of hydrogen peroxide, organic hydroperoxides and organic peroxyesters; at least one thiol, and at least one organic or inorganic compound containing certain metal ions. The three component curing agent which must be employed in the practice of this invention unexpectedly permits each of the two packs to be admixed by equal volume or weight without an adverse effect on adhesive performance or shelf stability and also permits the formulator to more effectively modify the acrylic adhesives to the user's needs.

The novel acrylic structural adhesive compositions of the invention comprise, in combination

(A) at least one olefinically unsaturated monomer;

(B) at least one polymeric material selected from the group consisting of

(1) at least one olefinically unsaturated urethane reaction product of at least one isocyanate-functional prepolymer and at least one hydroxy-functional monomer having at least one unit of polymerizable olefinic unsaturation, such reaction product being characterized by the presence of at least two units of olefinic unsaturation and the substantial absence of free isocyanate groups;

(2) at least one butadiene-based elastomeric polymeric material selected from the group consisting of

(a) homopolymer of butadiene;

(b) copolymer of butadiene and at least one monomer copolymerizable therewith selected from the group consisting of styrene, acrylonitrile, methacrylonitrile and mixtures thereof;

(c) modified elastomeric polymeric material selected from the group consisting of butadiene homopolymer and copolymer as previously defined, such homopolymer and copolymer having been modified by copolymerization therein of trace amounts up to 5 percent by weight, based on weight of modified elastomeric polymeric material, of at least one functional monomer; and

(d) mixtures thereof;

(3) at least one polymer-in-monomer syrup consisting essentially of

(b) from 2 to 90 percent by weight of at least one polymer derived from such (3) (a) monomers; and

(a) from 10 to 98 percent by weight of at least one olefinically unsaturated monomeric compound having at least one

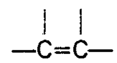 group;

(c) from 0 to 30 percent by weight of a polymer containing the group $(CH_2CCl{=}CHCH_2)_n$, wherein n is an integer;

wherein (3)(b) is present as a partial polymerization product of (3)(a) or of (3)(a) in the presence of (3)(c); the mixture of (3)(a) and (3)(b) or of (3)(a), (3)(b) and (3)(c) being a syrup of polymer dissolved or dispersed in unpolymerized monomer, in which syrup the amount of (3)(b) derived from (3)(a) is in the range from 2 to 90 percent by weight, based on the total weight of (3)(a), (3)(b) and (3)(c).

(4) at least one polymeric material selected from the group consisting of polyvinyl alkyl ether, styrene-acrylonitrile resin, unsaturated polyester resin and mixtures thereof, the alkyl moiety of such ether containing from one to 8 carbon atoms;

(5) at least one homopolymer or copolymer of at least one monomer selected from the group consisting of styrene and alkyl or hydroxyalkyl esters of acrylic or methacrylic acid, said ester having from one to 18 carbon atoms in the alkyl moiety; and

(6) at least one polymeric material having at least one terminal olefinically unsaturated group, said polymeric material being selected from the group consisting of, (1) at least one adduct of at least one ethylenically unsaturated monofunctional isocyanate and at least one polymeric material containing one or more active hydrogen atom-containing moiety(ies) selected from the group consisting of

—OH, $—NH_2$, —NH—, 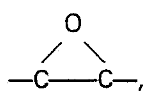, —SH and —COOH;

and, (2) at least one adduct of at least one reactive monomer having at least one terminal olefinically unsaturated group and at least one reactive moiety selected from the group consisting of

—OH, $—HN_2$, —NH—, 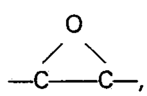, —SH and —COOH,

and at least one polymeric material which contains at least one moiety which is reactive with said reactive moiety of said reactive monomer, provided that, when said reactive moiety is —OH, said polymeric material does not contain a reactive —NCO group; and

(7) mixtures of such polymeric materials; and

(C) a redox catalyst curing agent comprising

(1) at least one peroxygen compound selected from the group consisting of hydrogen peroxide, organic peroxyesters and organic hydroperoxides;

(2) at least one organic sulfur-containing compound having at least one —SH group or having a tautomeric form containing at least one —SH group; and,

(3) at least one inorganic or organic compound of a metal ion, said metal ion having a standard reduction potential in the range from +0.9 to −0.5.

The free radical-polymerizable acrylic structural adhesive compositions of the invention are normally provided as two-package adhesive systems, with equal amounts, by weight or volume, of the package being mixed at the time of use. These adhesive compositions comprise

(I) a first package comprising

(A) at least one olefinically unsaturated monomer;

(B) at least one polymeric material selected from the group consisting of

(1) at least one olefinically unsaturated urethane reaction product of at least one isocyanate-functional prepolymer and at least one hydroxy-functional monomer having at least one unit of polymerizable olefinic unsaturation, such reaction product being characterized by the presence of at least two units of olefinic unsaturation and the substantial absence of free isocyanate groups;

(2) at least one butadiene-based elastomeric polymeric material selected from the group consisting of

(a) homopolymer of butadiene;

(b) copolymer of butadiene and at least one monomer copolymerizable therewith selected from the group consisting of styrene, acrylonitrile, methacrylonitrile and mixtures thereof;

(c) modified elastomeric polymeric material selected from the group consisting of butadiene homopolymer and copolymer as previously defined, such homopolymer and copolymer having been modified by copolymerization therein of trace amounts up to 5 percent by weight, based on weight of modified elastomeric polymeric material, of at least one functional monomer; and

(d) mixtures thereof;

(3) at least one polymer-in-monomer syrup consisting essentially of

(a) from 2 to 90 percent by weight of at least one polymer derived from such (3)(a) monomers; and,

(b) from 10 to 98 percent by weight of at least one olefinically unsaturated monomeric compound having at least one

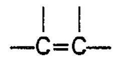 group;

(c) from 0 to 30 percent by weight of a polymer containing the group $(CH_2CCl{=}CHCH_2)_n$, wherein n is an integer;

wherein (3)(b) is present as a partial polymerization product of (3)(a) or of (3)(a) in the presence of (3)(c); the mixture of (3)(a) and (3)(b) or of (3)(a), (3)(b) and (3)(c) being a syrup of polymer dissolved or dispersed in unpolymerized monomer, in which syrup the amount of (3)(b) derived from (3)(a) is in the range from 2 to 90 percent by weight, based on the total weight of (3)(a), (3)(b) and (3)(c).

(4) at least one polymeric material selected from the group consisting of polyvinyl alkyl ether, styrene-acrylonitrile resin, unsaturated polyester resin and mixtures thereof, the alkyl moiety of such ether containing from one to 8 carbon atoms;

(5) at least one homopolymer or copolymer of at least one monomer selected from the group consisting of styrene and alkyl or hydroxyalkyl esters of acrylic or methacrylic acid, said ester having from one to 18 carbon atoms in the alkyl moiety; and,

(6) at least one polymeric material having at least one terminal olefinically unsaturated group, said polymeric material being selected from the group consisting of, (1) at least one adduct of at least one ethylenically unsaturated monofunctional isocyanate and at least one polymeric material containing one or more active hydrogen atom-containing moiety(ies) selected from the group consisting of

—OH, $—NH_2$, —NH—, 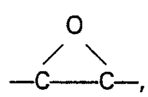, —SH and —COOH;

and, (2) at least one adduct of at least one reactive monomer having at least one terminal olefinically unsaturated group and at least one reactive moeity selected from the group consisting of

—OH, $—HN_2$, —NH—, 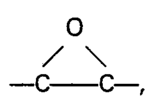, —SH and —COOH,

and at least one polymeric material which contains at least one moiety which is reactive with said reactive moiety of said reactive monomer, provided that, when said reactive moiety is —OH, said polymeric material does not contain a reactive —NCO group; and

(7) mixtures of such polymeric materials; and,

(C) at least one inorganic or organic compound of a metal ion, said metal ion having a standard reduction potential in the range from +0.9 to −0.5; and

(II) a second package comprising

(A) at least one olefinically unsaturated monomer;

(B) at least one polymeric material selected from the group consisting of

(1) at least one olefinically unsaturated urethane reaction product of at least one isocyanate-functional prepolymer and at least one hydroxy-functional monomer having at least 1 unit of polymerizable olefinic unsaturation, such reaction product being characterized by the presence of at least two units of olefinic unsaturation and the substantial absence of free isocyanate groups;

(2) at least one butadiene-based elastomeric polymeric material selected from the group consisting of

(a) homopolymer of butadiene;

(b) copolymer of butadiene and at least one monomer copolymerizable therewith selected from the group consisting of styrene, acrylonitrile, methacrylonitrile and mixtures thereof;

(c) modified elastomeric polymeric material selected from the group consisting of butadiene homopolymer and copolymer as previously defined, such homopolymer and copolymer having been modified by copolymerization therein of trace amounts up to 5 percent by weight, based on weight of modified elastomeric polymeric material, of at least one functional monomer; and

(d) mixtures thereof;

(3) at least one polymer-in-monomer syrup consisting essentially of

(b) from 2 to 90 percent by weight of at least one polymer derived from such (3)(a) monomers; and

(a) from 10 to 98 percent by weight of at least one olefinically unsaturated monomeric compound having at least one

$$-\overset{|}{C}=\overset{|}{C}- \text{ group;}$$

(c) from 0 to 30 percent by weight of a polymer containing the group $(CH_2CCl=CHCH_2)_n$, wherein n is an integer;

wherein (3)(b) is present as a partial polymerization product of (3)(a) or of (3)(a) in the presence of (3)(c); the mixture of (3)(a) and (3)(b) or of (3)(a), (3)(b) and (3)(c) being a syrup of polymer dissolved or dispersed in unpolymerized monomer, in which syrup the amount of (3)(b) derived from (3)(a) is in the range from 2 to 90 percent by weight, based on the total weight of (3)(a), (3)(b) and (3)(c).

(4) at least one polymeric material selected from the group consisting of polyvinyl alkyl ether, styrene-acrylonitrile resin, unsaturated polyester resin and mixtures thereof, the alkyl moiety of such ether containing from one to 8 carbon atoms;

(5) at least one homopolymer or copolymer of at least one monomer selected from the group consisting of styrene and alkyl or hydroxyalkyl esters of acrylic or methacrylic acid, said ester having from one to 18 carbon atoms in the alkyl moiety;

(6) at least one polymeric material having at least one terminal olefinically unsaturated group, said polymeric material being selected from the group consisting of, (1) at least one adduct of at least one ethylenically unsaturated monofunctional isocyanate and at least one polymeric material containing one or more active hydrogen atom-containing moiety(ies) selected from the group consisting of

$$-OH,\ -NH_2,\ -NH-,\ -\overset{\overset{O}{/\ \backslash}}{C\text{——}C}-,\ -SH \text{ and } -COOH;$$

and, (2) at least one adduct of at least one reactive monomer having at least one terminal olefinically unsaturated group and at least one reactive moiety selected from the group consisting of

$$-OH,\ -NH_2,\ -NH-,\ -\overset{\overset{O}{/\ \backslash}}{C\text{——}C}-,\ -SH \text{ and } -COOH,$$

and at least one polymeric material which contains at least one moiety which is reactive with said reactive moiety of said reactive monomer, provided that, when said reactive moiety is —OH, said polymeric material does not contain a reactive —NCO group; and

(7) mixtures of such polymeric materials;

(C) at least one organic sulfur-containing compound having at least one —SH group or having a tautomeric form containing at least one —SH group; and

(D) at least one peroxygen compound selected from the group consisting of hydrogen peroxide, organic peroxyesters and organic hydroperoxides;

wherein the volume or weight, respectively, of said first package is substantially equal to the volume or weight, respectively, of said second package, at the time when said packages are intermixed.

Each individual package of the adhesive compositions of the invention can optionally contain up to 30, preferably not more than 15 percent by weight, based on total weight of the individual package, of at least one polymeric material having an intrinsic viscosity in the range from 0.1 to 1.3, such polymeric material being obtained from the polymerization or copolymerization of at least one styrene monomer, acrylic monomer, substituted acrylic monomer, olefinically-unsaturated non-acrylic monomer or mixtures thereof; the total amount of such optional additive, when present in both packages, not exceeding 60, preferably 30, percent by weight, based on the combined weight of both packages; up to 20, preferably not more than 15, percent by weight, based on total weight of the package, of at least one elastomeric material having a second order glass transition temperature below 5°C; with the total amount of elastomeric material, when present in both packages, not exceeding 40, preferably 30, percent by weight, based on the

combined weight of both packages; up to 5 percent by weight of at least one unsaturated dicarboxylic acid ester; up to 10 percent by weight of at least one unsaturated polyester resin; up to 20 percent by weight of at least one unsaturated carboxylic acid having one or more, preferably one, carboxylic acid group; and up to one percent by weight of at least one waxy substance selected from the group consisting of paraffin wax, montan wax, beeswax, ceresin wax and spermaceti wax.

The invention further provides a method for bonding mating surfaces of two or metal substrates comprising applying to at least one of such surface a room temperature-curable adhesive composition comprising

(A) at least one olefinically unsaturated monomer;

(B) at least one polymeric material selected from the group consisting of

(1) at least one olefinically unsaturated urethane reaction product of at least one isocyanate-functional prepolymer and at least one hydroxy-functional monomer having at least one unit of polymerizable olefinic unsaturation, such reaction product being characterized by the presence of at least two units of olefinic unsaturation and the substantial absence of free isocyanate groups;

(2) at least one butadiene-based elastomeric polymeric material selected from the group consisting of

(a) homopolymer of butadiene;

(b) copolymer of butadiene and at least one monomer copolymerizable therewith selected from the group consisting of styrene, acrylonitrile, methacrylonitrile and mixtures thereof;

(c) modified elastomeric polymeric material selected from the group consisting of butadiene homopolymer and copolymer as previously defined, such homopolymer and copolymer having been modified by copolymerization therein by trace amounts up to 5 percent by weight, based on weight of modified elastomeric material, of at least one functional monomer; and

(d) mixtures thereof;

(3) at least one polymer-in-monomer syrup consisting essentially of

(a) from 10 to 98 percent by weight of at least one olefinically unsaturated monomeric compound having at least one

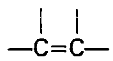 group;

(b) from 2 to 90 percent by weight of at least one polymer derived from such (3)(a) monomers;

(c) from zero to 30 percent by weight of at least one polymer containing the group $(CH_2CCl=CHCH_2)_n$, wherein n is an integer;

wherein (3)(b) is present as a partial polymerization product of (3)(a) or of (3)(a) in the presence of (3)(c); the mixture of (3)(a) and (3)(b) or of (3)(a), (3)(b) and (3)(c) being a syrup of polymer dissolved or dispersed in unpolymerized monomer, in which syrup the amount of (3)(b) derived from (3)(a) is in the range from 2 to 90 percent, based on the total weight of (3)(a), (3)(b) and (3)(c);

(4) at least one polymeric material selected from the group consisting of polyvinyl alkyl ether, styrene-acrylonitrile resin, unsaturated polyester resin and mixtures thereof, the alkyl moiety of such ether containing from one to 8 carbon atoms;

(5) at least one homopolymer or copolymer of at least one olefinically unsaturated monomer selected from the group consisting of styrene and alkyl or hydroxyalkyl esters of acrylic and methacrylic acid, said ester having one to 18 carbon atoms in the alkyl moiety;

(6) at least one polymeric material having at least one terminal olefinically unsaturated group, said polymeric material being selected from the group consisting of, (1) at least one adduct of at least one ethylenically unsaturated monofunctional isocyanate and at least one polymeric containing one or more active hydrogen moieties selected from the group consisting of

—OH, —$NH_2$, —NH—, 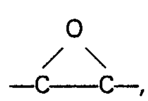, —SH and —COOH;

and, (2) at least one adduct of at least one reactive monomer having at least one terminal olefinically unsaturated group and at least one reactive moiety selected from the group consisting of

—OH, —$NH_2$, —NH—, 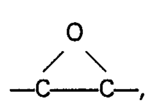, —SH and —COOH,

and at least one polymeric material which contains one or more moieties which are reactive with said reactive moiety of said reactive monomer, provided that, when said reactive moiety is —OH, said polymeric material does not contain a reactive —NCO group; and

(7) mixtures of such polymeric materials;

(C) at least one inorganic or organic compound of a metal ion, said metal ion having a standard reduction potential in the range from +0.9 to −0.5:

(D) at least one organic sulfur-containing compound having at least one —SH group or having a tautomeric form containing at least one —SH group; and

(E) at least one peroxygen compound selected from the group consisting of hydrogen peroxide, organic peroxyesters and organic hydroperoxides; and placing the mating surfaces in abutting relationship until the adhesive composition cures to effect bonding of said surfaces.

Polymer-in-monomer syrups suitable for use in the present invention, compositionally as well as their preparation, are well-known in the art. Representative syrups, including precursor liquid monomer compounds containing at least one olefinically unsaturated group, and their preparation are disclosed in U.S.A. Patents Nos. 3,333,025; 3,725,504; and 3,873,640. Briefly, such syrups are conveniently prepared by de-aerating the starting mixture consisting essentially of at least one polymerizable liquid olefinically unsaturated compound and, when used, polymer containing the group $(CH_2{-}CCl{=}CHCH_2)_n$, for a short period of about 40°C under vacuum and then heating the mixture to about 75°C under an inert gas atmosphere. A catalyst, for example, a free radical-generating catalyst such as benzoyl peroxide or azodiisobutyric acid dinitrile, is then added, preferably in the form of a solution. The quantity of catalyst added is such that it will be completely consumed when the desired viscosity is reached. After the reaction is completed, the polymer-in-monomer syrup is cooled. Preferably, the syrups have a viscosity in the range from about 500 to about 1,000,000 mPa · s at 20°C.

Monomeric liquid olefinically unsaturated compounds suitable for use in the adhesive compositions of the invention for forming polymer-in-monomer syrups and as additional polymerizable materials are characterized by the presence of at least one

$$-\overset{|}{C}=\overset{|}{C}- \text{ group.}$$

The olefinically unsaturated group is preferably a vinyl group, more preferably terminally located, with acrylic and substituted acrylic monomers being currently preferred. When olefinically unsaturated monomers which do not contain acrylic or methacrylic groups are employed, each individual package of the adhesive compositions should not contain more than 30, preferably not more than 15, percent by weight, based on the total weight of the individual package, with the total amount of such non-acrylic monomers being not more than 50, preferably not more than 25 percent by weight, based on the total weight of both packages. Representative olefinically unsaturated monomers include, without limitation, methyl methacrylate, butyl methacrylate, ethyl acrylate, diethylene glycol dimethacrylate, methacrylic acid, acrylic acid, acrylonitrile, methacrylonitrile, styrene, vinyl styrene, vinyl acetate, chlorostyrene, glycidyl methacrylate, itaconic acid, acrylamide, methacrylamide, vinylidene chloride, 2,3-dichloro-1,3-butadiene, 2-chloro-1,3-butadiene, methylstyrene, n-butylstyrene, 2-hydroxyethyl methacrylate, 2-hydroxyethyl acrylate, tetrahydrofurfuryl methacrylate, benzyl methacrylate and cyclohexyl methacrylate. Compounds such as benzyl methacrylate, cyclohexylmethacrylate and tetrahydrofurfuryl methacrylate are currently preferred in low odor formulations, with tetrafurfuryl methacrylate providing not only the least odorous compositions, but also the most rapid-curing.

Polymers containing the grouping $(CH_2{-}CCl{=}CHCH_2)_n$, wherein n is an integer, are well-known in the art under the name neoprene, which is produced by the polymerization of 2-chloro-1,3-butadiene. Further elucidation would be superfluous.

The isocyanate-functional prepolymers which are suitable for use in the practice of this invention are well-known. Typically, such prepolymers are adducts or condensation products of polyisocyanate compounds having at least 2 free isocyanate groups and monomeric or polymeric polyols having at least two hydroxy groups, including mixtures of such polyols. The reaction between the polyisocyanate and the polyols is effected employing an excess amount of polyisocyanate to ensure that the reaction product will contain at least 2 free, unreacted isocyanate groups.

Polyols useful in preparing isocyanate-functional prepolymer used in the present invention preferably have an average molecular weight of 300 to 3,000. Suitable polyols include polyalkylene glycols such as polyethylene glycols; polyetherpolyols such as those prepared by addition polymerization of ethylene oxide and a polyol such as trimethylol propane in a ratio to provide unreacted hydroxyl groups in the product; organic hydroxylated elastomers exhibiting second order glass transition temperatures below about 5°C such as poly(butadiene-styrene) polyols and poly(butadiene) polyols; polyester polyols such as are prepared by polymerizing polyols, such as diethylene glycol, trimethylol propane or 1,4-butanediol, with polycarboxylic acids, such as phthalic, terephthalic, adipic, maleic or succinic acids, in a ratio to provide unreacted hydroxyl groups in the product; glyceride esters of hydroxylated fatty acids such as castor oil, glycerol monoricinoleate, blown linseed oil and blown soya oil; and polyesterpolyols such as are prepared by the polymerization of a lactone such as ε caprolactone.

Polyisocyanates which can be reacted with polyols to form isocyanate-functional prepolymers for use in the present invention can be any monomeric; that is, non-polymeric, isocyanate compound having at least 2 free isocyanate groups, including aliphatic, cycloaliphatic and aromatic compounds. Representative polyisocyanates include, without limitation thereto, 2,4-tolylene diisocyanate, 2,6-tolylene diisocyanate, 4,4′-diphenylmethane diisocyanate, m- and p-phenylene diisocyanate, polymethylene poly(phenyl isocyanate), hexamethylene diisocyanate, 4,4′-methylene-bis(cyclohexyl isocyanate), hexamethylene

diisocyanate, 4,4'-methylene-bis(cyclohexyl isocyanate), isophorone diisocyanate, and other aliphatic cycloaliphatic and aromatic polyisocyanates, and including mixtures of such polyisocyanates. Currently, cycloaliphatic and aromatic polyisocyanates are preferred.

Hydroxy-functional compounds which can be employed to introduce olefinic unsaturation into the isocyanate-functional prepolymer include, without limitation, hydroxyethyl acrylate, hydroxyethyl methacrylate, and allyl alcohol.

The butadiene-based elastomeric polymeric materials which are suitable for use in the practice of this invention are also well-known and can be any elastomer derived from 1,3-butadiene or its halogenated analogs which has a glass transition temperature below ambient temperature and preferably not above about 5°C. Suitable elastomers include butadiene homopolymer, copolymers of butadiene with styrene, acrylonitrile and methacrylonitrile, and such homopolymers and copolymers modified by copolymerization therein of trace amounts (0.05 to 5 percent) of a functional comonomer, such as acrylic acid, methacrylic acid, maleic anhydride, fumaric acid, styrene and methyl methacrylate.

Polyvinyl alkyl ethers suitable for use in the adhesive compositions which are described herein are well-known in the art. Such ethers will preferably contain one to 8, more preferably one to 4, carbon atoms in the alkyl moiety of said ether. Likewise, styreneacrylonitrile polymers which are suitable for use in the invention are well-known.

The adducts of ethylenically unsaturated monofunctional isocyanates and saturated or unsaturated polymeric materials having one or more active hydrogen atom-containing groups selected from the group consisting of —OH, $—NH_2$, —NH—, —SH and —COOH which are suitable for use in the practice of the invention are readily prepared by procedures well known in the art.

Ethylenically unsaturated monofunctional isocyanates are known in the art. Methods of making such compounds, for example, by phosgenation of the corresponding amino alkyl methacrylate, are disclosed in U.S.A. patents 2,718,516 and 2,821,544, which describe isocyanate esters of acrylic methacrylic and crotonic acids. Isocyanatoethyl methacrylate is a currently preferred compound for forming such adducts. Substantially any saturated or unsaturated having at least two active hydrogen atom-containing group can be reacted with the monofunctional isocyanate esters of the unsaturated monocarboxylic acids. Representative polymeric materials include polyesters, polyethers, polytiols, polyamines and polyamides, with polyethers, such as poly(tetramethylene ether) glycol being currently preferred.

Reactive monomers which have at least one terminal olefinically unsaturated group at least one reactive moiety selected from the group consisting of

—OH, $—NH_2$, —NA—, 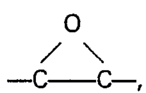, —SH and —COOH

are well known, as are methods for making such compounds and the reactions into which such compounds enter. Representative compounds include 2-hydroxyethyl methacrylate, 2-hydroxyethyl acrylate, allyl alcohol, amino ethyl methacrylate, amino ethyl acrylate, dimethylamino ethyl methacrylate, glycidyl methacrylate, mercapto ethyl methacrylate, acrylic acid, methacrylic acid and crotonic acid. Polymeric materials which have one or more groups which are reactive with such functional groups (—OH, $—NH_2$, etc.,) are equally well known. For example, isocyanate-functional polyurethanes are reactive with $—NH_2$ and —NH— groups, polyamines and polyamides are reactive with oxirane groups, polyesters, which contain —COOH groups, are reactive with —OH and —SH groups, and polyols, such as polyethers and polythiols are reactive with —COOH groups. The reactive monomer and the polymeric material can be reacted in stoichiometric amounts or, in those cases in which the polymeric material has two or more reactive groups, one can use less than stoichiometric amounts of the reactive monomer if desired, thus leaving some of the polymers reactive groups unreacted.

Elastomeric polymeric materials having second order glass transition temperatures below about 5°C can be effective in modifying room temperature flexibility of the adhesive bond. Especially preferred of such elastomers are polychloroprene rubber; polybutadiene rubber; butadiene copolymer rubbers such as acrylonitrile-butadiene, carboxylated acrylonitrile-butadiene and styrene-butadiene rubbers; polyacrylate rubbers such as poly(ethyl acrylate) and poly(ethyl acrylate-halogenated vinyl ether-acrylic acid) rubbers; and ethylene copolymers such as ethylene-vinyl acetate rubbers. Other elastomeric polymers having a glass transition temperature about 5°C can be employed since, other than the low glass transition temperature, there are no other limitations on the identity of the elastomer except for the specific requirements of the particular adhesive being formulated, such as suitable molecular weight, viscosity characteristics and compatibility with the other ingredients of the adhesive.

Such elastomeric polymeric materials are particularly beneficial when incorporated in acrylic adhesives comprising at least one olefinically unsaturated polyurethane.

Non-acrylic monomers which can be employed in the herein-described adhesive systems include styrene, chlorostyrene, vinyl styrene and vinyl acetate.

Polymeric materials having an intrinsic viscosity of 0.1 to about 1.3 which are suitable for use in the present invention can be obtained by the polymerization of one or more acrylic and nonacrylic monomers, including mixtures thereof. Exemplary polymeric materials include poly(methyl methacrylate/n-butyl-

acrylate/ethylacrylate) (90/5/5); poly(n-butyl methacrylate/isobutyl methacrylate) (50/50); poly(n-butyl methacrylate) and poly(ethyl methacrylate). Preferably, the viscosity will be about midway in the recited range.

The use of polymeric materials having such intrinsic viscosities is especially beneficial in acrylic adhesives containing homopolymers and copolymers of 1,3-butadiene.

Phosphorous-containing compounds which are suitable for use in the adhesive compositions of the invention are selected from the group consisting of derivatives of phosphinic acid, phosphonic acid and phosphoric acid having at least one —POH group and at least one organic moiety characterized by the presence of at least one olefinically unsaturated group, which is preferably terminally located. More particularly, such olefinically unsaturated organophosphorous compounds have the characteristic formula

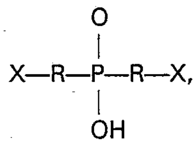

I.

wherein each R is the same or different, and each R is independently a divalent organic radical directly bonded to the phosphorous atom through a carbon-phosphorous bond, said divalent radical being selected from the group consisting of divalent unsubstituted organic radical and divalent organic radical having at least one substituent group selected from the class consisting of halogen, hydroxyl, amino, alkyl radical containing from one to 8, preferably one to 4, carbon atoms and aryl radical having at least one moiety containing at least one aromatic nucleus; at least one X is

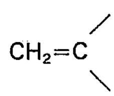

and the other X is a functional group selected from the group consisting of hydrogen, hydroxyl, amino, mercapto, halogen and 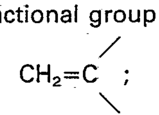 ;

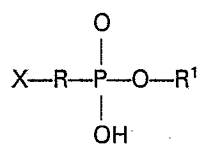

II.

wherein R is as previously defined; $R^1$ is hydrogen or $-R^2-X$, wherein $R^2$ is a divalent organic radical directly bonded to the oxygen radical through a carbon-oxygen bond, said divalent radical being selected from the group consisting of divalent unsubstituted organic radical and divalent organic radical having at least one substituent group selected from the class consisting of halogen, hydroxyl, amino, alkyl radical containing from one to 8 carbon atoms and aryl radical having at least one moiety containing at least one aromatic nucleus; and wherein X is as previously defined, with the proviso that at least one X moiety must be 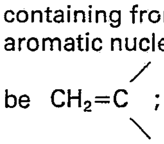 ;

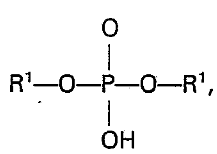

III.

wherein $R^1$ is as previously described, with the proviso that at least one $R^1$ group contains at least one

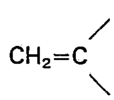

moiety.

A currently preferred group of phosphorous-containing compound has the formula

$$(CH_2{=}\underset{\displaystyle R^3}{\underset{|}{C}}{-}\overset{\displaystyle O}{\overset{\|}{C}}{-}O{-}A)_m{-}\overset{\displaystyle O}{\overset{\|}{\underset{\displaystyle OH}{\underset{|}{P}}}}{-}(OR^4)_{2-m}, \qquad IV.$$

wherein $R^3$ is selected from the group consisting of hydrogen, halogen, an alkyl group having from one to 8, preferably one to 4, carbon atoms, and $CH_2{=}CH—$; $R^4$ is selected from the group consisting of hydrogen, an alkyl group having from one to 8, preferably one to 4 carbon atoms, and a haloalkyl group having one to 8, preferably one to 4, carbon atoms; A is selected from the group consisting of $—R^5O—$ and $(R^6O)_n$, wherein $R^5$ is an aliphatic or cycloaliphatic alkylene group containing from one to 9, preferably 2 to 6, carbon atoms; $R^6$ is an alkylene group having from one to 7, preferably 2 to 4, carbon atoms; n is an integer from 2 to 10, and m is 1 or 2, preferably 1.

In the several formulae I—IV, the divalent organic radicals R and $R^2$ can have a compound structure, that is, the radical can contain at least one, or a series of at least 2, unsubstituted or substituted hydrocarbon group(s) containing or separated from each other by —O—, —S—, —COO—, —NH—, —NHCOO—, and $(R^7O)_p$, wherein $R^7$ is an alkylene group containing from 2 to 7, preferably 2 to 4 carbon atoms, and p is an integer from 2 to 10. Preferably, the divalent radical is an alkylene radical having a straight chain or ring of from one to 22, preferably one to 9, carbon atoms in any non-repeating unit. It will be understood that divalent radicals having a compound structure would have 2 or more of such straight chains or rings. The divalent radicals can be saturated or unsaturated; aliphatic, cycloaliphatic or aromatic; and, with compound structures, can include mixtures thereof; and generally have from one to about 22 carbon atoms in each chain or ring of carbon atoms.

In the several formulae I—III, representative X—R— and X—$R^2$— radicals include, without limitation thereto, lower alkenyl, cyclohexenyl, hydroxy-lower alkenyl, halo-lower alkenyl, carboxy-lower alkenyl, lower alkyl, amino-lower alkyl, hydroxy-lower alkyl, mercapto-lower alkyl, alkoxy-lower alkyl, halo-lower alkyl, di-phosphonomethyl-amino-lower alkyl, phenyl-hydroxy-phosphonomethyl, amino-phenyl-hydroxy-phosphonomethyl, halophenyl-hydroxy-phosphonomethyl, phenyl-amino-phosphonomethyl, halophenyl-amino-phosphonomethyl, hydroxy-phosphonomethyl, lower alkyl-hydroxy-phosphonomethyl, halo-lower alkyl-hydroxyphosphonomethyl and amino-lower alkyl-hydroxy-phosphonomethyl; the term "lower" referring to a group containing from one to 8, preferably one to 4 carbon atoms.

Phosphorous-containing compounds having vinyl unsaturation are preferred over such compounds having allylic unsaturation, with monoesters of phosphinic, phosphonic and phosphoric acids having one unit of vinyl or allylic, especially vinyl, unsaturation presently being preferred. Representative phosphorous-containing compounds include, without limitation, phosphoric acid; 2-methacryloyloxyethyl phosphate; bis-(2-methacryloyloxyethyl) phosphate; 2-acryloyloxyethyl phosphate; bis-(2-acryloyloxyethyl) phosphate; methyl-(2-methacryloyloxyethyl) phosphate; ethyl methacryloyloxyethyl phosphate; methyl acryloyloxyethyl phosphate; ethyl acryloyloxyethyl phosphate; compounds of Formula IV wherein $R^3$ is hydrogen or methyl and $R^4$ is propyl, isobutyl, ethylhexyl, halopropyl, haloisobutyl or haloethylhexyl; vinyl phosphonic acid; cyclohexene-3-phosphonic acid; alpha-hydroxybutene-2-phosphonic acid; 1-hydroxy-1-phenylmethane-1,1-diphosphonic acid; 1-hydroxy-1-methyl-1-1-diphosphonic acid; 1-amino-1-phenyl-1,1-di-phosphonic acid; 3-amino-1-hydroxypropane-1,1-diphosphonic acid; amino-tris (methylenephosphonic acid); gammaaminopropylphosphonic acid; gamma-glycidoxypropylphosphonic acid; phosphoric acid-mono-2-aminoethyl ester; allyl phosphonic acid; allyl phosphinic acid; β-methacryloyl-oxyethyl phosphinic acid; diallylphosphinic acid; bis(β-methacryloyl-oxyethyl) phosphinic acid and allyl methacryloyloxyethyl phosphinic acid.

Peroxygen compounds which are suitable for use in the present invention are selected from the group consisting of hydrogen peroxide, organic peroxyesters of peroxymonocarboxylic acids, full and partial organic peroxyesters of monoperoxy dicarboxylic acids and diperoxydicarboxylic acids, full and partial organic peroxyesters of peroxymonocarbonic acids and peroxydicarbonic acids, full and partial esters of organic peroxymonocarbonic and peroxydicarbonic acids, and organic hydroperoxides. A partial but representative listing of organic peroxygen compounds which can be utilized in the practice of the invention include t-butyl peroxyacetate, t-butyl peroxybenzoate, t-butyl peroxy-(2-ethylhexanoate), t-butylperoxyisobutyrate, o,o-t-butyl o-isopropyl monoperoxy carbonate, t-butylperoxypivalate, 2,5-dimethyl-2,5-di(benzoyl-peroxy)hexane, t-butylperoxy(2-ethylbutyrate), 2,5-dimethyl-2,5di(2-ethyl-hexanoyl peroxy) hexane, di-t-butyl diperoxyphthalate, o,o-t-butyl o-hydrogenmonoperoxymaleate, di-sec-butyl peroxydicarbonate, diisopropylperoxy dicarbonate, dicyclohexyl peroxydicarbonate, t-butyl peroxy-crotonate, N,N-diethyl-t-butyl peroxycarbonate, N,N-diphenyl t-butyl peroxycarbonate, acetyl cyclohexylsulfonyl peroxide, cumene hydroperoxide, t-butyl hydroperoxide, methyl ethyl ketone hydroperoxide, and diisopropyl benzene hydroperoxide. The peroxygen compound is employed in an amount in the range from 0.05 to 10, preferably 0.2 to 3, most preferably 0.5 to 1.5, percent by weight, based on the total weight of the package into which it is incorporated.

The organosulfur compounds which are employed in the practice of the invention must be mercaptan compounds which have at least one —SH group or which exist in a tautomeric form containing at least one

—SH group. A partial but representative listing of such compounds include mercaptoacetic acid, mercaptosuccinic (malic) acid, 3-mercaptopropionic acid, thioglycerol, polyethylene glycol dimercaptoacetate, 2,2′-dimercaptodiethyl ether, thioglycerol, polyethylene glycol di-3-mercaptopropionate, polyethylene glycol dimercaptoacetate, dodecyl thioglycolate, methyl thioglycolate, 2-mercaptobenzothazole, diisopropyl benzothiazyl-2-sulfenamide, 2-thiohydantoin, 2-mercapto-6-nitrobenzothiazole, thiophenol, 2-benzimidazolethiol, 3,3′-thiopropionic acid, sodium thioglycolate, polyethylene dimercaptoacetate, isodecyl thioglycolate and mercapto silane. The organic thiols are employed in an amount in the range of 0.005 to 2, preferably 0.05 to 1, most preferably 0.1 to 0.5, percent by weight, based on the total weight of the pack into which they are incorporated.

The third component for the oxidation-reduction couple curing agent is an inorganic or an organic compound containing at least one metal ion which has a standard reduction potential in the range from +0.9 to −0.5, preferably +0.8 to −0.3, and more preferably +0.35 to +0.01. The metal ion-containing compounds are interactive with the herein described peroxygen and organosulfur compounds to generate free radicals which are capable of initiating and propagating the polymerization of olefinically unsaturated monomers and polymers, and including graft polymerization and crosslinking between such unsaturated materials and polymers which are normally not considered further polymerizable. The metal ion can be in either the cationic or anionic moiety of the compound in which it is included. Preferred metal ions include copper, tin, cobalt, zinc and iron, with $Cu^{2+}$, $Cu(NH_3)_4{}^{2+}$, $VO^{2+}$, $Cu(Cl)_4{}^{-2}$, $Fe^{3+}$, $Co^{2+}$, $Co(Cl)_4{}^{-2}$, $Co(NH_3)_6{}^{2+}$, $Co(H_2O)_4{}^{2+}$, cupric naphthenate, cupric acetate, cobalt acetate, cobalt acetylacetonate and stannic chloride being especially preferred. Currently, inorganic metal salts, especially the chloride or bromide salts are preferred where increased cure rate is desired. Reducing or totally eliminating the halogen compound increases the time required for cure, thus providing the formulator with a myriad of options with respect to cure rate. The metal ion-containing compounds are employed in an amount in the range from 0.005 to 1, preferably 0.01 to 0.5, most preferably 0.05 to 0.1, percent by weight, based on the weight of the pack into which they are incorporated. Halogen-containing compounds will be employed in the range from 0.005 to 0.5, preferably 0.01 to 0.25, most preferably 0.05 to 0.1, percent by weight, also based on the weight of the pack into which they are incorporated.

It has also been discovered that the incorporation of hydroxyl containing materials, such as ethylene glycol, glycerine and the like in amounts less than 10, preferably less than 5, percent by weight, based on total weight of both packages, provides a more lengthy pot life and a longer cure period. Water has also been found to be effective in increasing pot life and, in addition, improves storage stability of the compositions, when used in amounts not exceeding two percent by weight, based on total weight of the combined packages.

The herein-described adhesive compositions are prepared by conventional methods, such as are disclosed in U.S.A. patents 3,832,774 and 3,890,407, both of which disclosures are incorporated herein by reference. Typically, the compositions are provided as two-part systems, with the sulfur compound and peroxygen compound being kept separate from the metal compound until prior to use. The adhesive systems are epsecially useful for bonding metal surfaces such as steel, aluminum and copper to a variety of substrates, including metals, fibers, glass, ceramics, wood, and the like, with litte, if any pretreatment of the metal surface prior to application of the primer or adhesive, as the case may be. Thus, bonding can be effected even to oily metal surfaces which are otherwise clean without an extensive pretreatment as is usually required with the vast majority of currently available primers and adhesives. Additionally, the adhesive systems of this invention provide effective bonding at room temperature, thus heat is not required either for applying the adhesive systems to the substrates or for curing. They can also be employed on porous substrates, unlike the anearobic adhesives which require the exclusion of air and thus cannot be used on surfaces containing air in their pores.

The invention is illustrated by the following examples, wherein all parts, proportions and percentages are by weight unless otherwise indicated.

Example I

Compositions were prepared according to the following formulations.

| Adhesive | 1—1 | 1—2 | 1—3 | 1—4 |
|---|---|---|---|---|
| Tetrahydrofurfuryl methacrylate | 6.72 | 6.72 | 6.72 | 6.72 |
| Bisphenol-A fumarate polyester | 12.48 | 12.48 | 12.48 | 12.48 |
| $CuCl_2$ | 0.01 | 0.01 | 0.01 | 0.01 |
| t-Butyl perbenzoate | 0.25 | 0.25 | 0.25 | 0.25 |
| Mercaptosuccinic acid | 0.20 | — | — | — |
| Mercaptobenzothiazole | — | 0.20 | — | — |
| 3-Mercaptopropionic acid | — | — | 0.20 | — |
| Thioglycolic acid | — | — | — | 0.20 |
| Water | 0.19 | 0.19 | 0.19 | 0.19 |

The gel time was determined by dipping a glass stirring rod into the composition and noting the time at which the composition no longer flowed. The gel times are reported below.

| Adhesive | Gel time |
|---|---|
| 1—1 | <60 seconds |
| 1—2 | 6 minutes |
| 1—3 | 2 minutes |
| 1—4 | 1 min. 30 sec. |

Example II

Adhesive compositions are prepared from the indicated ingredients. After thorough mixing, the gel times for each formulation was determined following the procedure of Example I. The gel times are reported in the Table.

| Adhesive | 2—1 | 2—2 | 2—3 | 2—4 | 2—5 | 2—6 | 2—7 |
|---|---|---|---|---|---|---|---|
| Methyl methacrylate | 12.5 | 12.5 | 12.5 | 12.5 | 12.5 | 12.5 | 12.5 |
| Bisphenol-A fumarate polyester | 12.5 | 12.5 | 12.5 | 12.5 | 12.5 | 12.5 | 12.5 |
| $CuCl_2$ | 0.0008 | 0.0008 | 0.0008 | 0.0008 | 0.0008 | 0.0008 | —— |
| t-Butyl perbenzoate | 0.25 | 0.25 | 0.25 | 0.25 | 0.25 | 0.25 | 0.25 |
| Mercaptobenzothiazole | 0.10 | —— | —— | —— | —— | —— | 0.10 |
| Diisopropyl benzothiazyl-2-sulfenamide | —— | 0.10 | —— | —— | —— | —— | —— |
| Benzothiazyl disulfide | —— | —— | 0.10 | —— | —— | —— | —— |
| N-t-butyl-2-benzothiazole-sulfenamide | —— | —— | —— | 0.10 | —— | —— | —— |
| N-oxydiethylene benzothiazole-2-sulfenamide | —— | —— | —— | —— | 0.10 | —— | —— |
| N-cyclohexyl-2-benzothiazole-sulfenamide | —— | —— | —— | —— | —— | —— | —— |
| gel time, minutes | 35 | 90 | NC[a] | NC[a] | NC[a] | NC[a] | NC[a] |

[a]NC is no cure.

Example III

Two formulations are prepared as follows:

| Formulation | I | II |
|---|---|---|
| Methyl methacrylate | 12.5 | —— |
| Tetrahydrofurfuryl methacrylate | —— | 12.5 |
| Bisphenol-A fumarate polyester | 12.5 | 12.5 |
| $CuCl_2$ | 0.1 | 0.1 |
| t-Butyl perbenzoate | 0.25 | 0.25 |

Various sulfur compounds were added to the formulations I and II. Except for mercaptobenzothiazole which was added in an amount of 0.1 PBW, the sulfur compounds were added in an amount of 0.2 PBW. The gel times for each resulting mixture was determined following the procedure of Example I. The results are reported below.

| Formulation | Sulfur compound | Gel time |
|---|---|---|
| I | Mercaptobenzothiazole | 43 minutes |
| I | 2-Thiohydantoin | 60 minutes |
| I | Thiourea | No cure |
| I | Dithiooxamide | No cure |
| I | Trimethylthiourea | No cure |
| I | Ethylene trithiocarbonate | No cure |
| I | 2-Mercapto-6-nitro-benzothiazole | 52 minutes |
| I | Mercaptosuccinic acid | 9 minutes |
| I | 3-Mercaptopropionic acid | 35 minutes |
| I | Benzimidazolethiol | 4 hours |
| I | Dodecyl thioglycollate | 4 hours |

Example III

| Formulation | Sulfur compound | Gel time |
|---|---|---|
| II | Mercaptosuccinic acid | < 60 seconds |
| II | Mercaptobenzothiazole | 8 minutes |
| II | 3-Mercaptopropionic acid | 2 minutes |
| II | Thioglycolic acid | 1 min. 30 sec. |
| II | Ethylene glycol dimercaptoacetate | 1 minute |
| II | Dimercapto diethyl ether | 1 minute |
| II | Thioglycerol | 50 seconds |
| II | Polyethylene glycol di-3-mercaptopropionate | 1 minute |
| II | 3,3′-Thiopropionic acid | >15 minutes |
| II | Sodium thioglycollate | >15 minutes |
| II | Mercaptosuccinic acid | 50 seconds |
| II | Polyethylene glycol dimercaptoacetate | 30 seconds |
| II | Polyethylene dimercaptoacetate | 35 seconds |
| II | Isodecyl thioglycollate | 55 seconds |
| II | Methyl thioglycollate | 45 seconds |

Example IV

The following compositions were prepared by homogeneously blending the ingredients. Gel times for each composition were obtained following the procedure of Example I.

| Adhesive | 4—1 | 4—2 | 4—3 | 4—4 | 4—5 | 4—6 | 4—7 | 4—8 | 4—9 |
|---|---|---|---|---|---|---|---|---|---|
| Methyl methacrylate | 12.5 | 12.5 | 12.5 | 12.5 | 12.5 | 12.5 | 12.5 | 12.5 | 12.5 |
| Bisphenol-A fumarate polyester | 12.5 | 12.5 | 12.5 | 12.5 | 12.5 | 12.5 | 12.5 | 12.5 | 12.5 |
| Mercaptobenzothiazole | 0.10 | 0.10 | 0.10 | 0.10 | 0.10 | 0.10 | 0.10 | 0.10 | 0.10 |
| t-Butyl perbenzoate | 0.25 | 0.25 | 0.25 | 0.25 | 0.25 | 0.25 | 0.25 | 0.35 | 0.50 |
| $CuCl_2$ | 0.003 | 0.005 | 0.01 | 0.02 | 0.025 | 0.038 | 0.02 | 0.02 | 0.02 |
| Gel time | <1 hr. | 50 min | 43 min | 30 min | 25 min | 22 min | 30 min | 25 min | 27 min |

| Adhesive | 4—10 | 4—11 | 4—12 | 4—13 | 4—14 | 4—15 | 4—16 | 4—17 | 4—18 |
|---|---|---|---|---|---|---|---|---|---|
| Methyl methacrylate | 12.5 | 12.5 | 12.5 | 12.5 | 12.5 | 12.5 | 12.5 | 12.5 | 12.5 |
| Bisphenol A fumarate polyester | 12.5 | 12.5 | 12.5 | 12.5 | 12.5 | 12.5 | 12.5 | 12.5 | 12.5 |
| Mercaptobenzothiazole | 0.10 | 0.10 | 0.10 | 0.15 | 0.20 | 0.25 | 0.30 | 0.35 | 0.40 |
| t-Butyl perbenzoate | 1.0 | 1.5 | 2.0 | 0.35 | 0.35 | 0.35 | 0.35 | 0.35 | 0.35 |
| $CuCl_2$ | 0.02 | 0.2 | 0.2 | 0.02 | 0.02 | 0.01 | 0.02 | 0.2 | 0.2 |
| Gel time, minutes | 34 min | 30 min | 26 min | 17 min | 31 min | 24 min | 34 min | 32 min | 40 min |

Example V

The following data illustrate unsaturated monomers which are effectively utilized in the practice of the invention. The gel times are determined following the procedure of Example I. The base adhesive formulations are as follows:

| Base adhesive | 5—1 | 5—2 | 5—3 |
|---|---|---|---|
| $CuCl_2$ | 0.02 | 0.02 | 0.023 |
| Mercaptosuccinic acid | 0.05 | 0.10 | 0.10 |
| t-Butyl perbenzoate | 0.35 | 0.35 | 0.35 |
| Bis-phenol A fumarate polyester | 5.0 | 5.0 | 5.0 |
| Unsaturated monomer | See table | | |
| Cyclohexyl methacrylate | —— | 5.0 | 5.0 |
| Gel time | See table | 1 min 30 sec | 2 min 15 sec |

For base adhesive 5—1;

| Unsaturated monomer | Amount, PBW | Gel time |
|---|---|---|
| Tetrahydrofurfuryl methacrylate | 5.0 | 52 seconds |
| 2-Hydroxyethyl methacrylate | 5.0 | None |
| Ethylene glycol dimethacrylate | 5.0 | 1 minute |
| 2-Hydroxyethyl methacrylate/methyl methacrylate | 2.5/2.5 | None |
| Cyclohexyl methacrylate | 5.0 | None |
| Butyl methacrylate | 5.0 | 10 minutes |
| Ethylene glycol dimethacrylate/tetrahydrofurfuryl methacrylate | 0.5/4.5 | 45 seconds |
| " " | 4.0/4.0 | 35 seconds |
| " " | 1.5/3.5 | 43 seconds |
| " " | 2.0/3.0 | 35 seconds |
| " " | 2.5/2.5 | 23 seconds |
| 2-Hydroxyethyl methacrylate/tetrahydrofurfuryl methacrylate | 0.5/4.5 | 33 seconds |
| " " | 1.25/3.75 | None |

Example VI

This example illustrates the effect of metal ions.
It should be noted that lead ion is not within the scope of the invention.

| Adhesive | 6—1 | 6—2 | 6—3 | 6—4 | 6—5 | 6—6 | 6—7 | 6—8 | 6—9 | 6—10 |
|---|---|---|---|---|---|---|---|---|---|---|
| Bisphenol-A fumarate polyester | 23.0 | 23.0 | 23.0 | 23.0 | 23.0 | 23.0 | 23.0 | 23.0 | 23.0 | 23.0 |
| Tetrahydrofurfuryl methacrylate | 41.1 | 40.9 | 40.9 | 40.9 | 40.8 | 40.9 | 40.9 | 41.0 | 40.9 | 41.0 |
| PTMO methacrylourethane | 18.1 | 17.9 | 18.0 | 17.9 | 17.8 | 17.9 | 17.9 | 18.0 | 17.9 | 18.0 |
| 2-Hydroxyethyl methacrylate | 3.3 | 3.3 | 3.3 | 3.3 | 3.3 | 3.3 | 3.3 | 3.3 | 3.3 | 3.3 |
| HEMA-phosphate | 13.3 | 13.3 | 13.3 | 13.3 | 13.2 | 13.2 | 13.2 | 13.3 | 13.3 | 13.3 |
| Mercaptosuccinic acid | 0.35 | 0.35 | 0.35 | 0.35 | 0.35 | 0.35 | 0.35 | 0.35 | 0.35 | 0.35 |
| t-Butyl perbenzoate | 0.45 | 0.45 | 0.45 | 0.45 | 0.45 | 0.45 | 0.45 | 0.45 | 0.45 | 0.45 |
| Water | 0.40 | 0.70 | 0.70 | 0.70 | 0.90 | 0.90 | 0.90 | 0.45 | 0.75 | — |
| Methanol | — | — | — | — | — | — | — | — | — | 0.50 |
| $CuCl_2$ | 0.04 | — | — | — | — | — | — | — | — | — |
| $AlCl_3$ | — | 0.04 | — | — | — | — | — | — | — | — |
| $CoCl_2$ | — | — | 0.04 | — | — | — | — | — | — | — |
| $SnCl_2$ | — | — | — | 0.06 | — | — | — | — | — | — |
| $ZnCl_2$ | — | — | — | — | 0.10 | — | — | — | — | — |
| $NiCl_2$ | — | — | — | — | — | 0.05 | — | — | — | — |
| $FeCl_2$ | — | — | — | — | — | — | 0.05 | — | — | — |
| $Pb(C_2H_3O_2)_2$ | — | — | — | — | — | — | — | 0.10 | — | — |
| $Cu(C_2H_3O_2)_2$ | — | — | — | — | — | — | — | — | 0.2 | — |
| Vanadyl acetylacetonate | — | — | — | — | — | — | — | — | — | 0.03 |

Gel time
6—1 10 minutes
6—2 5 to 16 hours
6—3 5 to 16 hours
6—4 5 to 16 hours, partial gel
6—5 greater than 16 hours, slight gel
6—6 greater than 16 hours, slight gel
6—7 less than 5 hours, partial gel
6—8 no cure
6—9 3 hours 30 minutes
6—10 less than 6 hours

Example VII

The following data illustrate various polymeric materials which can be employed in the practice of the invention. The gel times are determined following the procedure of Example I. The base adhesive formulations are as follows:

| Base adhesive | 7—1 | 7—2 | 7—3 |
|---|---|---|---|
| Triethylene glycol dimethacrylate | 2.5 | — | — |
| Tetrahydrofurfuryl methacrylate | 2.5 | 2.5 | 2.5 |
| Polyethylene glycol dimethacrylate | — | 2.5 | 5.0 |
| Bisphenol-A fumarate polyester | 2.5 | 2.5 | 2.5 |
| Polymer | See table | See table | See table |
| $CuCl_2$ | 0.02 | 0.02 | 0.02 |
| Mercaptosuccinic acid | 1.00 | 1.00 | 1.00 |
| t-Butyl perbenzoate | 0.35 | 0.35 | 0.35 |

| Polymer | Amount, PBW | Adhesive | Gel time |
|---|---|---|---|
| HEMA-capped polytetramethylene ether glycol | 2.5 | 7—1 | 4 min. 30 sec. |
| VTBN[a] (acrylate terminated) | 2.5 | 7—1 | 4 min. 15 sec. |
| VTBNX (methacrylate terminated) | 2.5 | 7—1 | 7 min. 15 sec. |
| PE 1106—63[b] | 2.5 | 7—2 | 53 seconds |
| PE 1106—63[b] | 5.0 | 7—3 | 20 seconds |
| VTBN | 2.5 | 7—2 | 1 minute |
| VTBN | 5.0 | 7—3 | 30 seconds |
| VTBN (methacrylate terminated) | 2.5 | 7—2 | 45 seconds |
| VTBN (methacrylate terminated) | 5.0 | 7—3 | 1 min. 30 sec. |
| VTBN (acrylate terminated) | 2.5 | 7—2 | 1 min. 15 sec. |
| VTBN (acrylate terminated) | 5.0 | 7—3 | 45 seconds |

[a]VTBN is vinyl-terminated butadiene acrylonitrile copolymer
[b]PE—1106—63 PTMO acrylourethane

Example VIII

The following example illustrates the effect which the concentration of peroxygen compound has on cure rate.

| Adhesive | 8—1 | 8—2 | 8—3 | 8—4 | 8—5 | 8—6 | 8—7 |
|---|---|---|---|---|---|---|---|
| Bisphenol-A fumarate polyester | 23.1 | 23.1 | 23.1 | 23.1 | 23.0 | 23.0 | 22.9 |
| PTMO methacrylourethane | 17.7 | 17.7 | 17.7 | 17.7 | 17.7 | 17.6 | 17.6 |
| Tetrahydrofurfuryl methacrylate | 40.9 | 40.9 | 40.8 | 40.8 | 40.7 | 40.6 | 40.4 |
| $CuCl_2 \cdot 2H_2O$ | .02 | .02 | .02 | .02 | .02 | .02 | .02 |
| 2-Hydroxyethyl methacrylate | 3.7 | 3.7 | 3.7 | 3.7 | 3.6 | 3.6 | 3.6 |
| Mercaptosuccinic acid | .37 | .37 | .37 | .37 | .37 | .37 | .37 |
| HEMA-phosphate | 13.2 | 13.2 | 13.2 | 13.1 | 13.1 | 13.1 | 13.1 |
| t-Butyl perbenzoate | —— | .14 | .18 | .27 | .54 | 0.80 | 1.1 |
| Water | 1.0 | 1.0 | 1.0 | 1.0 | 1.0 | 1.0 | 1.0 |

| Adhesive | 8—8 | 8—9 | 8—10 | 8—11 | 8—12 | 8—13 |
|---|---|---|---|---|---|---|
| Bisphenol-A fumarate polyester | 22.8 | 22.8 | 22.7 | 22.6 | 22.6 | 22.6 |
| PTMO methacrylourethane | 17.5 | 17.5 | 17.4 | 17.4 | 17.3 | 17.5 |
| Tetrahydrofurfuryl methacrylate | 40.3 | 40.2 | 40.1 | 40.0 | 39.9 | 39.8 |
| $CuCl_2 \cdot 2H_2O$ | .02 | .02 | .02 | .02 | .02 | .02 |
| 2-Hydroxyethyl methacrylate | 3.6 | 3.6 | 3.6 | 3.6 | 3.6 | 3.6 |
| Mercaptosuccinic acid | .36 | .36 | .36 | .36 | .36 | .36 |
| HEMA-phosphate | 13.0 | 13.0 | 12.9 | 12.9 | 12.9 | 12.8 |
| t-Butyl perbenzoate | 1.3 | 1.6 | 1.9 | 2.1 | 2.4 | 2.6 |
| Water | 1.0 | 1.0 | 1.0 | 1.0 | 1.0 | 1.0 |

| Gel time | | |
|---|---|---|
| | 8—1 | No cure |
| | 8—2 | 1 hour 10 minutes |
| | 8—3 | 40 minutes |
| | 8—4 | 28 minutes |
| | 8—5 | 21 minutes |
| | 8—6 | 15 minutes |
| | 8—7 | 13 minutes |
| | 8—8 | 12 minutes |
| | 8—9 | 11 minutes |
| | 8—10 | 11 minutes |
| | 8—11 | 10 minutes |
| | 8—12 | 10 minutes |
| | 8—13 | 10 minutes |

Example IX

The following Example illustrates the effect of halogen and water concentration on cure rate.

| Adhesive | 9—1 | 9—2 | 9—3 | 9—4 | 9—5 | 9—6 | 9—7 |
|---|---|---|---|---|---|---|---|
| 2-Hydroxyethyl methacrylate | 5.0 | 5.0 | 5.0 | 6.28 | 5.0 | 5.9 | 6.28 |
| Bisphenol A fumarate polyester | 5.0 | 5.0 | 5.0 | 5.0 | 5.0 | 5.0 | 5.0 |
| Mercaptosuccinic acid | 0.1 | 0.1 | 0.1 | 0.1 | 0.1 | 0.1 | 0.1 |
| t-Butyl perbenzoate | 0.3 | 0.3 | 0.3 | 0.2 | 0.2 | 0.2 | 0.2 |
| Cupric acetate | 0.1 | — | 0.1 | — | — | — | — |
| Hydrochloric acid | — | 0.01 | 0.1 | — | — | — | — |
| $CuCl_2$ | — | — | — | 0.02 | 0.02 | 0.02 | 0.02 |
| Water | 0.19 | 0.19 | 0.38 | — | 1.28 | 0.38 | 0.9 |
| Gel time | PPO[a] | PPO[a] | 40 sec | 1 min 45 sec | >15 min | 8 min | >15 min |

[a]Partial polymerization overnight

Example X

The following two-package adhesive is prepared:

| | Part A | Part B |
|---|---|---|
| Tetrahydrofurfuryl methacrylate | 100 | 100 |
| 2-Hydroxyethyl methacrylate | 14.4 | 1.9 |
| Methacryloylethoxyphosphate | — | 74.0 |
| Bis-phenol A fumarate polyester | 100 | — |
| 2-Hydroxyethyl methacrylate-capped poly(tetramethylene glycol) polyurethane | — | 100 |
| $CuCl_2$ | — | 0.1 |
| Mercaptosuccinic acid | 1.6 | — |
| t-Butyl perbenzoate | 2.0 | — |
| TOTAL | 218.0 | 276.0 |

Equal weight amounts of Part A and Part B were combined by mixing Part B into Part A. After thorough mixing, the mixed composition was employed to bond various substrates, using a 0.5 in. overlap and a 10 mil glue line. The bonded assemblies were cured overnight. Peel strength of the bonded assemblies was obtained following the procedure of ASTM D1002—79. The data is reported in the following Table:

| Substrate | Bond strength, psi |
|---|---|
| CQ1010 CRS | 1588 |
| SAE1010 CRS | 2152 |
| Galvanized CRS | 1556 |
| 2024—T3 Alclad Al | 1136 |
| 6061—T6 Al | 1044 |
| Copper | 1116 |
| Brass SAE 72 | 1296 |
| Magnesium | 844 |

Example XI·

The following example illustrates the effect which concentration of metal ion has on cure rate.

| Adhesive | 11—1 | 11—2 | 11—3 | 11—4 | 11—5 | 11—6 | 11—7 | 11—8 | 11—9 | 11—10 |
|---|---|---|---|---|---|---|---|---|---|---|
| Bisphenol-A fumarate polyester | 22.9 | 22.8 | 22.8 | 22.7 | 22.6 | 22.6 | 22.5 | 22.5 | 22.4 | 23.6 |
| PTMO methacrylourethane | 17.8 | 17.8 | 17.7 | 17.7 | 17.6 | 17.6 | 17.5 | 17.5 | 17.4 | 17.9 |
| Tetrahydrofurfuryl methacrylate | 40.7 | 40.6 | 40.5 | 40.4 | 40.2 | 40.2 | 40.0 | 40.0 | 39.8 | 40.8 |
| $CuCl_2$ | .01 | .03 | .04 | .05 | .07 | .08 | .10 | .11 | .12 | —— |
| Mercaptosuccinic acid | .37 | .37 | .37 | .36 | .36 | .36 | .36 | .36 | .36 | .37 |
| 2-Hydroxyethyl methacrylate | 3.6 | 3.8 | 4.1 | 4.3 | 4.5 | 4.8 | 5.0 | 5.3 | 5.5 | 3.3 |
| HEMA-phosphate | 13.1 | 13.1 | 13.1 | 13.0 | 13.0 | 13.0 | 12.9 | 12.9 | 12.9 | 13.2 |
| t-Butyl perbenzoate | .45 | .45 | .45 | .44 | .44 | .44 | .44 | .44 | .44 | .45 |
| Water | 1.0 | 1.0 | 1.0 | 1.0 | 1.0 | 1.0 | 1.0 | 1.0 | 1.0 | 1.0 |

Gel time 11—1 26 minutes
11—2 16 minutes
11—3 14 minutes
11—4 13 minutes
11—5 13 minutes
11—6 13 minutes
11—7 12 minutes
11—8 12 minutes
11—9 12 minutes
11—10 no cure

Example XII

The following example illustrates the effect which concentration of sulfur-containing compound has upon cure rates.

| Adhesive | 12—1 | 12—2 | 12—3 | 12—4 | 12—5 | 12—6 |
|---|---|---|---|---|---|---|
| Bisphenol-A fumarate polyester | 24.7 | 24.7 | 24.6 | 24.5 | 24.5 | 24.4 |
| PTMO methacrylourethane | 17.7 | 17.7 | 17.6 | 17.6 | 17.5 | 17.5 |
| Tetrahydrofurfuryl methacrylate | 42.5 | 42.4 | 42.2 | 42.1 | 42.0 | 41.9 |
| $CuCl_2$ | .02 | .02 | .02 | .02 | .02 | .02 |
| Mercaptosuccinic acid | — | .03 | .06 | .08 | .11 | .14 |
| 2-Hydroxyethyl methacrylate | .33 | 0.6 | 0.8 | 1.1 | 1.3 | 1.6 |
| HEMA-phosphate | 13.2 | 13.2 | 13.1 | 13.1 | 13.0 | 13.0 |
| t-Butyl perbenzoate | .50 | .50 | .50 | .50 | .50 | .50 |
| Water | 1.0 | 1.0 | 1.0 | 1.0 | 1.0 | 1.0 |

| Adhesive | 12—7 | 12—8 | 12—9 | 12—10 | 12—11 |
|---|---|---|---|---|---|
| Bisphenol-A fumarate polyester | 24.3 | 24.3 | 24.2 | 24.1 | 24.1 |
| PTMO methacrylourethane | 17.4 | 17.4 | 17.4 | 17.3 | 17.3 |
| Tetrahydrofurfuryl methacrylate | 41.7 | 41.7 | 41.5 | 41.4 | 41.4 |
| $CuCl_2$ | .02 | .02 | .02 | .02 | .02 |
| Mercaptosuccinic acid | .17 | .19 | .22 | .25 | .27 |
| 2-Hydroxyethyl methacrylate | 1.8 | 2.1 | 2.3 | 2.5 | 2.8 |
| HEMA-phosphate | 13.0 | 12.9 | 12.9 | 12.9 | 12.8 |
| t-Butyl perbenzoate | .50 | .50 | 0.5 | 0.5 | 0.5 |
| Water | 1.0 | 1.0 | 1.0 | 1.0 | — |

| Gel time | | |
|---|---|---|
| | 12—1 | No cure |
| | 12—2 | No cure |
| | 12—3 | 1 hour |
| | 12—4 | 25 minutes |
| | 12—5 | 19 minutes |
| | 12—6 | 19 minutes |
| | 12—7 | 18 minutes |
| | 12—8 | 18 minutes |
| | 12—9 | 18 minutes |
| | 12—10 | 18 minutes |

Example XIII

This example illustrates the effect which compounds such as glycerine has upon cure rates.

| Adhesive | 13—1 | 13—2 | 13—3 | 13—4 | 13—5 | 13—6 | 13—7 |
|---|---|---|---|---|---|---|---|
| Bisphenol-A fumarate polyester | 22.8 | 22.8 | 22.8 | 22.8 | 22.8 | 22.8 | 22.8 |
| Tetrahydrofurfuryl methacrylate | 39.9 | 39.5 | 39.2 | 38.9 | 38.6 | 38.2 | 36.5 |
| PTMO methacrylourethane | 17.1 | 16.7 | 16.4 | 16.1 | 15.8 | 15.4 | 13.7 |
| 2-Hydroxyethyl methacrylate | 4.0 | 4.0 | 4.0 | 4.0 | 4.0 | 4.0 | 3.9 |
| HEMA-phosphate | 13.4 | 13.1 | 12.9 | 12.6 | 12.3 | 12.1 | 10.7 |
| Glycerine | —— | 1.0 | 2.0 | 3.0 | 4.0 | 5.0 | 10.0 |
| Mercaptosuccinic acid | .41 | .41 | .41 | .41 | .41 | .41 | .41 |
| $CuCl_2 \cdot 2H_2O$ | .018 | .017 | .017 | .016 | .016 | .016 | .014 |
| t-Butyl perbenzoate | 0.25 | 0.25 | 0.25 | 0.25 | 0.25 | 0.25 | 0.25 |
| Water | 1.0 | 1.0 | 1.0 | 1.0 | 0.90 | 0.90 | 0.80 |
| Cab-o-sil (Registered trade mark) | 1.0 | 1.0 | 1.0 | 1.0 | 0.94 | 0.90 | 0.80 |

Gel time 13—1 24 minutes
13—2 28 minutes
13—3 1 hour 15 minutes
13—4 1 hour 40 minutes
13—5 2 hours 15 minutes
13—6 3 hours 15 minutes
13—7 20 to 30 hours

Example XIV

The following example illustrates the effect of peroxygen concentration on cure speed.

| Adhesive | 14—1 | 14—2 | 14—3 | 14—4 | 14—5 | 14—6 |
|---|---|---|---|---|---|---|
| Bisphenol-A fumarate polyester | 23.1 | 23.0 | 22.9 | 22.9 | 22.8 | 22.8 |
| Tetrahydrofurfuryl methacrylate | 40.8 | 40.7 | 40.6 | 40.5 | 40.4 | 40.3 |
| PTMO methacrylourethane | 17.8 | 17.7 | 17.7 | 17.6 | 17.6 | 17.6 |
| 2-Hydroxyethyl methacrylate | 3.6 | 3.6 | 3.6 | 3.6 | 3.6 | 3.6 |
| $CuCl_2 \cdot 2H_2O$ | 0.01 | 0.01 | 0.01 | 0.01 | 0.01 | 0.01 |
| HEMA-phosphate | 13.1 | 13.0 | 13.0 | 13.0 | 12.9 | 12.9 |
| Water | 1.0 | 1.0 | 1.0 | 1.0 | 1.0 | 1.0 |
| Dicotyl phthalate | 0.10 | 0.20 | 0.40 | 0.50 | 0.60 | .70 |
| t-Butyl peroctoate | 0.10 | 0.20 | 0.40 | 0.50 | 0.60 | .70 |
| Mercaptosuccinic acid | 0.37 | 0.37 | 0.37 | 0.37 | 0.37 | 0.36 |

| Adhesive | 14—7 | 14—8 | 14—9 | 14—10 | 14—11 | 14—12 |
|---|---|---|---|---|---|---|
| Bisphenol-A fumarate polyester | 22.6 | 22.4 | 22.2 | 21.8 | 21.4 | 21.0 |
| Tetrahydrofurfuryl methacrylate | 40.1 | 39.7 | 39.3 | 38.6 | 37.9 | 37.2 |
| PTMO methacrylourethane | 17.5 | 17.3 | 17.1 | 16.8 | 16.5 | 16.2 |
| 2-Hydroxyethyl methacrylate | 3.6 | 3.6 | 3.5 | 3.4 | 3.4 | 3.3 |
| $CuCl_2 \cdot 2H_2O$ | 0.01 | 0.01 | 0.01 | 0.01 | 0.01 | 0.01 |
| HEMA-phosphate | 12.8 | 12.7 | 12.6 | 12.4 | 12.1 | 11.9 |
| Water | 1.0 | 1.0 | 1.0 | 0.9 | 0.9 | 0.9 |
| Dioctyl phthalate | 1.0 | 1.4 | 1.9 | 2.8 | 3.7 | 4.5 |
| t-Butyl peroctoate | 1.0 | 1.4 | 1.9 | 2.8 | 3.7 | 4.5 |
| Mercaptosuccinic acid | 0.36 | 0.36 | 0.36 | 0.35 | 0.34 | 0.34 |

Gel time 14—1 1 hour 35 minutes
14—2 47 minutes
14—3 30 minutes
14—4 28 minutes
14—5 23 minutes
14—6 21 minutes
14—7 19 minutes
14—8 17 minutes
14—9 15 minutes
14—10 13 minutes
14—11 13 minutes
14—12 12 minutes

Example XV

The following data illustrate the use of hydroperoxide compounds as the only peroxygen compound in combination with a third compound and an organic or inorganic metal ion-containing compound.

| Adhesive | 15—1 | 15—2 |
|---|---|---|
| Bisphenol-A fumarate polyester | 22.7 | 22.7 |
| HEMA-capped PTMO urethane | 26.0 | 26.0 |
| Methyl methacrylate | 36.7 | 36.7 |
| Tetrahydrofurfuryl methacrylate | 3.8 | 3.8 |
| Hydroxyethyl methacrylate | 0.5 | 0.5 |
| HEMA-phosphate | 4.2 | 4.2 |
| Ethylene glycol | 3.7 | 3.7 |
| Thiomalic acid | 0.4 | 0.4 |
| $CuCl_2 \cdot 2H_2O$ | 0.03 | 0.03 |
| Cumene hydroperoxide | 0.22 | —— |
| t-Butyl perbenzoate | —— | 0.22 |
| Cabosil HS-5 (registered trade mark) | 1.7 | 1.7 |
| Gel time | 4.0′ | 3′15″—4′15″ |
| Shear strength to CQ1010CRS—10 mil glue line | 2350 psi | 1900 psi |

Example XVI

The following data illustrate the tolerance of the adhesive compositions of the invention. Using the adhesive of Example X, gel times of the mixed adhesives at different mix ratios were determined, following the procedure of Example I. The results are reported below:

Effect of mix ratio on gel time

| Part A | 1 | 1 | 1 | 1 | 1 | 1 | 1 | 1 | 1 | 1 | 1 | 1 | 1 |
|---|---|---|---|---|---|---|---|---|---|---|---|---|---|
| Part B | 9 | 4 | 2.3 | 2.1 | 1.9 | 1.8 | 1.6 | 1.5 | 1.4 | 1.3 | 1.2 | 1.1 | 1 |
| Gel time | NC | 42″ | 22″ | 20″ | 19″ | 19″ | 17″ | 17″ | 17″ | 17″ | 16″ | 16″ | 16″ |

| Part A | 1 | 1 | 1 | 1 | 1 | 1 | 1 | 1 | 1 | 1 | 1 | 1 |
|---|---|---|---|---|---|---|---|---|---|---|---|---|
| Part B | .9 | .85 | 0.8 | 0.7 | .65 | 0.6 | .55 | 0.5 | .45 | 0.4 | .25 | .10 |
| Gel time | 16″ | 16″ | 16″ | 16″ | 15″ | 15″ | 16″ | 15″ | 16″ | 17″ | 19″ | 60″ |

Example XVII

The following data demonstrate the effect of inhibitor concentration upon cure rate:

| Adhesive | 17—1 | 17—2 | 17—3 | 17—4 | 17—5 |
|---|---|---|---|---|---|
| Tetrahydrofurfuryl methacrylate | 46.4 | 46.5 | 46.6 | 46.7 | 46.8 |
| Bisphenol-A fumarate polyester | 46.2 | 46.1 | 46.0 | 45.9 | 45.8 |
| Mercaptosuccinic acid | 0.46 | 0.46 | 0.46 | 0.46 | 0.46 |
| $CuCl_2 \cdot 2H_2O$ | 0.18 | 0.18 | 0.18 | 0.18 | 0.18 |
| t-Butyl perbenzoate | 3.2 | 3.2 | 3.2 | 3.2 | 3.2 |
| Water | 3.5 | 3.5 | 3.5 | 3.5 | 3.5 |
| Benzoquinone | 0.02 | 0.04 | 0.07 | 0.09 | 0.12 |
| Gel time, seconds | 50 | 57 | 67 | 125 | NC[a] |

[a]NC is no cure.

**Claims**

1. A three-component oxidation-reduction catalyst system consisting from 0.05 to 10 parts by weight of at least one organic hydroperoxide; from 0.005 to 2 parts by weight of at least one organic thiol; and from 0.0005 to 1 part by weight of at least one inorganic or organic compound of a metal having a standard reduction potential in the range from +0.9 to −0.5.

2. A catalyst system according to claim 1 wherein said organic thiol comprises mercaptosuccinic acid.

3. A catalyst system according to claim 1 wherein said metal compound comprises cupric chloride.

4. A catalyst system according to claim 3 wherein said organic thiol comprises mercaptosuccinic acid.

5. A catalyst system according to claim 4 where said hydroperoxide comprises cumene hydroperoxide.

6. An acrylic adhesive composition comprising

I. a first package comprising

(A) at least one olefinically unsaturated monomer;

(B) at least one polymeric material selected from the group consisting of

(1) at least one olefinically unsaturated urethane reaction product of at least one isocyanate-functional prepolymer and at least one hydroxy-functional monomer having at least one unit of polymerizable olefinic unsaturation, such reaction product being characterized by the presence of at least two units of olefinic unsaturation and the substantial absence of free isocyanate groups;

(2) at least one butadiene-based elastomeric polymeric material selected from the group consisting of

(a) homopolymer of butadiene;

(b) copolymer of butadiene and at least one monomer copolymerizable therewith selected from the group consisting of styrene, acrylonitrile, methacrylonitrile and mixtures thereof;

(c) modified elastomeric polymeric material selected from the group consisting of butadiene homopolymer and copolymer as previously defined, such homopolymer and copolymer having been modified by copolymerization therein by trace amounts up to 5 percent by weight, based on weight of modified elastomeric material, of at least one functional monomer; and

(d) mixtures thereof;

(3) at least one polymer-in-monomer syrup consisting essentially of

(a) from 10 to 98 percent by weight of at least one olefinically unsaturated monomeric compound having at least one

$$-\overset{|}{C}=\overset{|}{C}- \text{ group;}$$

(b) from 2 to 90 percent by weight of at least one polymer derived from such (3)(a) monomers;

(c) from zero to 30 percent by weight of at least one polymer containing the group $(CH_2CCl{=}CHCH_2)_n$, wherein n is an integer;

wherein (3)(b) is present as a partial polymerization product of (3)(a) or of (3)(a) in the presence of (3)(c); the mixture of (3)(a) and (3)(b) or of (3)(a), (3)(b) and (3)(c) being a syrup of polymer dissolved or dispersed in unpolymerized monomer, in which syrup the amount of (3)(b) derived from (3)(a) is in the range from 2 to 90 percent, based on the total weight of (3)(a), (3)(b) and (3)(c);

(4) at least one polymeric material selected from the group consisting of polyvinyl alkyl ether, styrene-acrylonitrile resin, unsaturated polyester resin and mixtures thereof, the alkyl moiety of such ether containing from one to 8 carbon atoms;

(5) at least one homopolymer or copolymer of at least one olefinically unsaturated monomer selected from the group consisting of styrene and alkyl or hydroxyalkyl esters of acrylic and methacrylic acid, said ester having one to 18 carbon atoms in the alkyl moiety;

(6) at least one polymeric material having at least one terminal olefinically unsaturated group, said polymeric material being selected from the group consisting of, (1) at least one adduct of at least one ethylenically unsaturated monofunctional isocyanate and at least one polymeric containing one or more active hydrogen moieties selected from the group consisting of

—OH, —$NH_2$, —NH—, 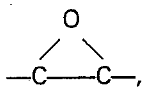, —SH and —COOH;

and (2) at least one adduct of at least one reactive monomer having at least one terminal olefinically unsaturated group and at least one reactive moiety selected from the group consisting of

—OH, —$NH_2$, —NH—, 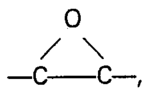, —SH and —COOH,

and at least one polymeric material which contains one or more moieties which are reactive with said reactive moiety of said reactive monomer, provided that, when said reactive moiety is —OH, said polymeric material does not contain a reactive —NCO group; and,

(7) mixtures of such polymeric materials; and,

(C) at least one inorganic or organic compound of a metal ion, said metal ion having a standard reduction potential in the range from +0.9 to −0.5; and

II a second package comprising

(A) at least one olefinically unsaturated monomer;

(B) at least one polymeric material selected from the group consisting of

(1) at least one olefinically unsaturated urethane reaction product of at least one isocyanate-functional prepolymer and at least one hydroxy-functional monomer having at least one unit of polymerizable olefinic unsaturation, such reaction product being characterized by the presence of at least two units of olefinic unsaturation and the substantial absence of free isocyanate groups;

(2) at least one butadiene-based elastomeric polymeric material selected from the group consisting of

(a) homopolymer of butadiene;

(b) copolymer of butadiene and at least one monomer copolymerizable therewith selected from the group consisting of styrene, acrylonitrile, methacrylonitrile and mixtures thereof;

(c) modified elastomers polymeric material selected from the group consisting of butadiene homopolymer and copolymer as previously defined, such homopolymer and copolymer having been modified by copolymerization therein by trace amounts up to 5 percent by weight, based on weight of modified elastomeric material, of at least one functional monomer; and

(d) mixtures thereof;

(3) at least one polymer-in-monomer syrup consisting essentially of

(a) from 10 to 98 percent by weight of at least one olefinically unsaturated monomeric compound having at least one

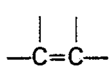 group;

(b) from 2 to 90 percent by weight of at least one polymer derived from such (3)(a) monomers;

(c) from zero to 30 percent by weight of at least one polymer containing the group $(CH_2CCl{=}CHCH_2)_n$, wherein n is an integer;

wherein (3)(b) is present as a partial polymerization product of (3)(a) or of (3)(a) in the presence of (3)(c); the mixture of (3)(a) and (3)(b) or of (3)(a), (3)(b) and (3)(c) being a syrup of polymer dissolved or dispersed in unpolymerized monomer, in which syrup the amount of (3)(b) derived from (3)(a) is in the range from 2 to 90 percent, based on the total weight of (3)(a), (3)(b) and (3)(c);

(4) at least one polymeric material selected from the group consisting of polyvinyl alkyl ether, styrene-acrylonitrile resin, unsaturated polyester resin and mixtures thereof, the alkyl moiety of such ether containing from one to 8 carbon atoms;

(5) at least one homopolymer or copolymer of at least one olefinically unsaturated monomer selected from the group consisting of styrene and alkyl or hydroxyalkyl esters of acrylic and methacrylic acid, said ester having from one to 18 carbon atoms in the alkyl moiety;

(6) at least one polymeric material having at least one terminal olefinically unsaturated group, said polymeric material being selected from the group consisting of, (1) at least one adduct of at least one ethylenically unsaturated monofunctional isocyanate and at least one polymeric containing one or more active hydrogen moieties selected from the group consisting of

O
/ \
—OH, $—NH_2$, —NH—, —C——C—, —SH and —COOH;

and, (2) at least one adduct of at least one reactive monomer having at least one terminal olefinically unsaturated group and at least one reactive moiety selected from the group consisting of

O
/ \
—OH, $—NH_2$, —NH—, —C——C—, —SH and —COOH,

and at least one polymeric material which contains one or more moieties which are reactive with said reactive moiety of said reactive monomer, provided that, when said reactive moiety is —OH, said polymeric material does not contain a reactive —NCO group;

(7) mixtures of such polymeric materials;

(C) at least one organic sulfur containing compound having at least one —SH group or having a tautomeric form containing at least one —SH group; and

(D) at least one peroxygen compound selected from the group consisting of hydrogen peroxide, organic peroxyesters and organic hydroperoxides;

wherein the volume or weight, respectively, of said first package is substantially equal to the volume or weight, respectively, of said second package, at the time when said packages are intermixed.

7. An acrylic adhesive composition according to claim 6 containing up to 10 percent by weight of an organic compound containing at least one hydroxyl group.

8. An acrylic adhesive composition according to claim 6 containing up to 2 percent by weight of water.

9. An acrylic adhesive composition according to claim 7 containing up to 2 percent by weight of water.

10. An adhesive composition according to claim 6 wherein said organic sulfur-containing compound is mercaptosuccinic acid.

11. An adhesive composition according to claim 6 wherein said metal ion-containing compound is cupric chloride.

12. An adhesive composition according to claim 11 wherein said organic sulfur-containing compound is mercaptosuccinic acid.

13. An adhesive composition according to claim 12 containing up to 10 percent by weight of an organic compound containing at least one hydroxyl group.

14. An adhesive composition according to claim 12 containing up to 2 percent by weight of water.

15. An adhesive composition according to claim 13 containing up to 2 percent by weight of water.

16. A process for bonding mating surfaces of two or more metal substrates comprising applying to at least one of such surfaces a room temperature-curable adhesive composition comprising

(A) at least one olefinically unsaturated monomer;

(B) at least one polymeric material selected from the group consisting of

(1) at least one olefinically unsaturated urethane reaction product of at least one isocyanate-functional prepolymer and at least one hydroxy-functional monomer having at least one unit of polymerizable olefinic unsaturation, such reaction product being characterized by the presence of at least two units of olefinic unsaturation and the substantial absence of free isocyanate groups;

(2) at least one butadiene-based elastomeric polymeric material selected from the group consisting of

(a) homopolymer of butadiene;

(b) copolymer of butadiene and at least one monomer copolymerizable therewith selected from the group consisting of styrene, acrylonitrile, methacrylonitrile and mixtures thereof;

(c) modified elastomeric polymeric material selected from the group consisting of butadiene homopolymer and copolymer as previously defined, such homopolymer and copolymer having been modified by copolymerization therein by trace amounts up to 5 percent by weight, based on weight of modified elastomeric material, of at least one functional monomer; and

(d) mixtures thereof;

(3) at least one polymer-in-monomer syrup consisting essentially of

(a) from 10 to 98 percent by weight of at least one olefinically unsaturated monomeric compound having at least one

| |
—C=C— group;

(b) from 2 to 90 percent by weight of at least one polymer derived from such (3)(a) monomers;

(c) from zero to 30 percent by weight of at least one polymer containing the group $(CH_2CCl{=}CHCH_2)_n$, wherein n is an integer;

wherein (3)(b) is present as a partial polymerization product of (3)(a) or of (3)(a) in the presence of (3)(c); the mixture of (3)(a) and (3)(b) or of (3)(a), (3)(b) and (3)(c) being a syrup of polymer dissolved or dispersed in unpolymerized monomer, in which syrup the amount of (3)(b) derived from (3)(a) is in the range from 2 to 90 percent, based on the total weight of (3)(a), (3)(b) and (3)(c);

(4) at least one polymeric material selected from the group consisting of polyvinyl alkyl ether, styrene-acrylonitrile resin, unsaturated polyester resin and mixtures thereof, the alkyl moiety of such ether containing from one to 8 carbon atoms;

(5) at least one homopolymer or copolymer of at least one olefinically unsaturated monomer selected from the group consisting of styrene and alkyl or hydroxyalkyl esters of acrylic and methacrylic acid, said ester having one to 18 carbon atoms in the alkyl moiety;

(6) at least one polymeric material having at least one terminal olefinically unsaturated group, said polymeric material being selected from the group consisting of, (1) at least one adduct of at least one ethylenically unsaturated monofunctional isocyanate and at least one polymeric containing one or more active hydrogen moieties selected from the group consisting of

—OH, $—NH_2$, —NH—, 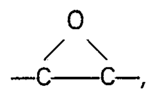, —SH and —COOH;

and, (2) at least one adduct of at least one reactive monomer having at least one terminal olefinically unsaturated group and at least one reactive moiety selected from the group consisting of

—OH, $—NH_2$, —NH—, 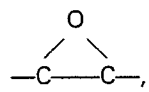, —SH and —COOH,

and at least one polymeric material which contains one or more moieties which are reactive with said reactive moiety of said reactive monomer, provided that, when said reactive moiety is —OH, said polymeric material does not contain a reactive —NCO group; and

(7) mixtures of such polymeric materials;

(C) at least one inorganic or organic compound of a metal ion, said metal ion having a standard reduction potential in the range from +0.9 to −0.5.

(D) at least one organic sulfur-containing compound having at least one —SH group or having a tautomeric form containing at least one —SH group; and

(E) at least one peroxygen compound selected from the group consisting of hydrogen peroxide, organic peroxyesters and organic hydroperoxides; and placing the mating surfaces in abutting relationship until the adhesive composition cures to effect bonding of said surfaces.

**Patentansprüche**

1. Drei-Komponenten-Redoxkatalysatorsystem bestehend aus 0,05 bis 10 Gewichtsteilen zumindest eines organischen Hydroperoxids, 0,005 bis 2 Gewichtsteilen zumindest eines organischen Thiols und 0,0005 bis 1 Gewichtsteil zumindest einer anorganischen oder organischen Verbindung eines Metalls, das ein Standardreduktionspotential im Bereich von +0,9 bis −0,5 hat.

2. Katalysatorsystem nach Anspruch 1, worin besagtes organisches Thiol Mercaptobernsteinsäure umfaßt.

3. Katalysatorsystem nach Anspruch 1, worin besagte Metallverbindung Kupfer(II)-chlorid umfaßt.

4. Katalysatorsystem nach Anspruch 3, worin besagtes organisches Thiol Mercaptobernsteinsäure umfaßt.

5. Katalysatorsystem nach Anspruch 4, wobei besagtes Hydroperoxid Cumolhydroperoxid umfaßt.

6. Acrylat-Klebstoffzusammensetzung, umfassend I. eine erste Packung, umfassend (A) zumindest ein olefinisch ungesättigtes Monomeres; (B) zumindest ein polymeres Material ausgewählt aus der Gruppe bestehend aus (1) zumindest einem olefinisch ungesättigten Urethanreaktionsprodukt von zumindest einem isocyanat-funktionellen Prepolymeren und zumindest einem hydroxy-funktionellen Monomeren, das zumindest eine Einheit polymerisierbarer olefinischer Ungesättigtheit aufweist, wobei ein solches Reaktionsprodukt dadurch gekennzeichnet ist, daß zumindest zwei Einheiten olefinischer Ungesättigtheit vorhanden und freie Isocyanatgruppen im wesentlichen abwesend sind; (2) zumindest einem elastomeren polymeren Material auf Butadienbasis, ausgewählt aus der Gruppe bestehend aus (a) Homopolymeren aus Butadien; (b) Copolymeren aus Butadien und zumindest einem damit copolymerisierbaren Monomeren ausgewählt aus der Gruppe bestehend aus Styrol, Acrylnitril, Methacrylnitril und deren Mischungen; (c) modifiziertem elastomerem Material ausgewählt aus der Gruppe bestehend aus Butadien-Homopolymeren und Copolymeren wie zuvor definiert, wobei solche Homo- und Copolymeren modifiziert wurden durch Copolymerisation mit Spurenmengen bis zu 5 Gew.-%, bezogen auf das Gewicht des

modifizierten elastomeren Materials, von zumindest einem funktionellen Monomeren; und (d) Mischungen davon; (3) zumindest einem Polymer-im-Monomer-Sirup, im wesentlichen bestehend aus (a) 10 bis 98 Gew.-% zumindest einer olefinisch ungesättigten monomeren Verbindung, die zumindest eine

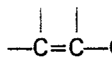 Gruppe enthält;

(b) 2 bis 90 Gew.-% zumindest eines Polymeren, das von solchen (3)(a) Monomeren abgeleitet ist; (c) 0 bis 30 Gew.-% zumindest eines Polymeren, das die Gruppe $(CH_2CCl{=}CHCH_2)_n$ enthält, worin n eine ganze Zahl ist; wobei (3)(b) als partielles Polymerisationsprodukt von (3)(a) oder von (3)(a) in Gegenwart von (3)(c) vorliegt; die Mischung von (3)(a) und (3)(b) oder von (3)(a), (3)(b) und (3)(c) ein Sirup eines Polymeren ist, das in unpolymerisiertem Monomerem gelöst oder dispergiert ist, wobei in diesem Sirup die Menge an von (3)(a) abgeleitetem (3)(b) zwischen 2 und 90% bezogen auf das Gesamtgewicht von (3)(a), (3)(b) und (3)(c) ist; (4) zumindest einem polymeren Material ausgewählt aus der Gruppe bestehend aus Polyvinylalkylether, Styrol-Acrylnitril-Harz, ungesättigtem Polyesterharz und deren Mischungen, wobei die Alkyleinheit solcher Ether 1 bis 8 Kohlenstoffatome enthält; (5) zumindest einem Homopolymeren oder Copolymeren zumindest eines olefinisch ungesättigten Monomeren ausgewählt aus der Gruppe bestehend aus Styrol und Alkyl- oder Hydroxyalkylestern von Acryl- und Methacrylsäure, wobei besagter Ester 1 bis 18 Kohlenstoffatome in der Alkyleinheit hat; (6) zumindest einem polymeren Material, das zumindest eine endständige olefinisch ungesättigte Gruppe hat, wobei besagtes polymeres Material ausgewählt wird aus der Gruppe bestehend aus (1) zumindest einem Addukt zumindest eines ethylenisch ungesättigtem mono-funktionellen Isocyanats und zumindest einer polymeren Substanz, die eine oder mehrere Einheiten aktiven Wasserstoffs enthält, ausgewählt aus der Gruppe bestehend aus

—OH, $-NH_2$, —NH—, 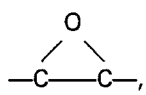, —SH und —COOH;

und (2) zumindest einem Addukt zumindest eines reaktiven Monomeren, das zumindest eine endständige olefinisch ungesättigte Gruppe und zumindest eine reaktive Einheit ausgewählt aus der Gruppe bestehend aus

—OH, $-NH_2$, —NH—, 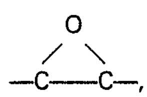, —SH und —COOH

hat, und zumindest eines polymeren Materials, das eine oder mehrere Einheiten enthält, die mit besagter reaktiver Einheit des besagten reaktiven Monomeren reaktiv sind, vorausgesetzt, daß besagtes polymeres Material wenn besagte reaktive Einheit —OH ist, nicht eine reaktive —NCO-Gruppe enthält; und (7) Mischungen solcher polymerer Materialien; und (C) zumindest eine anorganische oder organische Verbindung eines Metallions, wobei besagtes Metallion ein Standardreduktionspotential im Bereich von +0,9 bis −0,5 hat; und II eine zweite Packung bestehend aus (A) zumindest einem olefinisch ungesättigten Monomeren; (B) zumindest einem polymeren Material ausgewählt aus der Gruppe bestehend aus (1) zumindest einem olefinisch ungesättigten Urethanreaktionsprodukt zumindest eines isocyanatfunktionellen Prepolymeren und zumindest eines hydroxy-funktionellen Monomeren, das zumindest eine Einheit polymerisierbarer olefinischer Ungesättigtheit enthält, wobei ein solches Reaktionsprodukt dadurch charakterisiert ist, daß zumindest zwei Einheiten olefinischer Ungesättigtheit vorliegen und freie Isocyanatgruppen im wesentlichen abwesend sind; (2) zumindest einem elastomeren polymerem Material auf Butadienbasis, ausgewählt aus der Gruppe bestehend aus (a) Homopolymeren von Butadien; (b) Copolymeren von Butadien und zumindest einem damit copolymerisierbaren Monomeren ausgewählt aus der Gruppe bestehend aus Styrol, Acrylnitil, Methacrylnitril und deren Mischungen; (c) modifiziertem elastomeren polymeren Material ausgewählt aus der Gruppe bestehend aus Butadien-Homopolymerem und Copolymerem wie zuvor definiert, wobei solche Homo- und Copolymeren modifiziert wurden durch Copolymerisation mit Spurenmengen bis zu 5 Gew.-% bezogen auf das Gewicht des modifizierten elastomeren Materials, von zumindest einem funktionellen Monomeren; und (d) Mischungen davon; (3) zumindest einem Polymer-im-Monomer-Sirup, im wesentlichen bestehend aus (a) 10 bis 98 Gew.-% zumindest einer olefinisch ungesättigten monomeren Verbindung, die zumindest eine

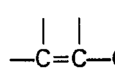 Gruppe enthält;

(b) 2 bis 90 Gew.-% zumindest eines Polymeren, das von solchen (3)(a) Monomeren abgeleitet ist, (c) 0 bis 30 Gew.-% zumindest eines Polymeren, das die Gruppe $(CH_2CCl{=}CHCH_2)_n$ enthält, worin n eine ganze Zahl ist; wobei (3)(b) als partielles Polymerisationsprodukt von (3)(a) oder von (3)(a) in Gegenwart von (3)(c) vorliegt; die Mischung von (3)(a) und (3)(b) oder von (3)(a), (3)(b) und (3)(c) ein Sirup eines Polymeren ist,

das in unpolymerisiertem Monomerem gelöst oder dispergiert ist, wobei in diesem Sirup die Menge an von (3)(a) abgeleitetem (3)(b) zwischen 2 und 90% bezogen auf das Gesamtgewicht von (3)(a), (3)(b) und (3)(c) ist; (4) zumindest einem polymeren Material ausgewählt aus der Gruppe bestehend aus Polyvinylalkylether, Styrol-Acrylnitril-Harz, ungesättigtem Polyesterharz und deren Mischungen, wobei die Alkyleinheit solcher Ether 1 bis 8 Kohlenstoffatome enthält; (5) zumindest einem Homopolymeren oder Copolymeren zumindest eines olefinisch ungesättigten Monomeren ausgewählt aus der Gruppe bestehend aus Styrol und Alkyl- oder Hydroxyalkylester von Acryl- und Methacrylsäure, wobei besagter Ester 1 bis 18 Kohlenstoffatome in der Alkyleinheit hat; (6) zumindest einem polymeren Material, das zumindest eine endständige olefinisch ungesättigte Gruppe hat, wobei besagtes polymeres Material ausgewählt wird aus der Gruppe bestehend aus (1) zumindest einem Addukt zumindest eines ethylenisch ungesättigten mono-funktionellen Isocyanats und zumindest einer polymeren Substanz, die eine oder mehrere Einheiten aktiven Wasserstoffes enthält, ausgewählt aus der Gruppe bestehend aus

—OH, —$NH_2$, —NH— 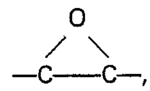, —SH und —COOH;

und (2) zumindest einem Addukt zumindest eines reaktiven Monomeren, das zumindest eine endständige olefinisch ungesättigte Gruppe und zumindest eine reaktive Einheit ausgewählt aus der Gruppe bestehend aus

—OH, —$NH_2$, —NH—, 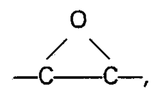, —SH und —COOH

enthält, und zumindest eines polymeren Materials, das eine oder mehrere Einheiten enthält, die mit besagter reaktiver Einheit des besagten reaktiven Monomeren reaktiv sind, vorausgesetzt, das besagtes polymeres Material wenn besagte reaktive Einheit —OH ist, nicht eine reaktive —NCO-Gruppe enthält; und (7) Mischungen solcher polymerer Materialien; und (C) zumindest einer organischen schwefelhaltigen Verbindung, die zumindest eine —SH-Gruppe enthält oder eine tautomere Form hat, die zumindest eine —SH-Gruppe enthält; und (D) zumindest einer Persauerstoffverbindung ausgewählt aus der Gruppe bestehend aus Wasserstoffperoxid, organischen Peroxyestern und organischen Hydroperoxiden; wobei zu dem Zeitpunkt, zu dem die Packungen vermischt werden, das Volumen oder das Gewicht besagter erster Packung im wesentlichen gleich ist dem Volumen oder Gewicht besagter zweiter Packung.

7. Acrylat-Klebstoffzusammensetzung nach Anspruch 6, die bis zu 10 Gew.-% einer organischen Verbindung enthält, die zumindest eine Hydroxylgruppe enthält.

8. Acrylat-Klebstoffzusammensetzung nach Anspruch 6, die bis zu 2 Gew.-% Wasser enthält.

9. Acrylat-Klebstoffzusammensetzung nach Anspruch 7, die bis zu 2 Gew.-% Wasser enthält.

10. Klebstoffzusammensetzung nach Anspruch 6, worin besagte organische schwefelhaltige Verbindung Mercaptobernsteinsäure ist.

11. Klebstoffzusammensetzung nach Anspruch 6, worin besagte metallionhaltige Verbindung Kupfer(II)-chlorid ist.

12. Klebstoffzusammensetzung nach Anspruch 11, worin besagte organische schwefelhaltige Verbindung Mercaptobernsteinsäure ist.

13. Klebstoffzusammensetzung nach Anspruch 12, die bis zu 10 Gew.-% einer organischen Verbindung enthält, die zumindest eine Hydroxylgruppe enthält.

14. Klebstoffzusammensetzung nach Anspruch 12, die bis zu 2 Gew.-% Wasser enthält.

15. Klebstoffzusammensetzung nach Anspruch 13, die bis zu 2 Gew.-% Wasser enthält.

16. Verfahren, die einander zugeordneten Flächen zweier oder mehrerer Metallsubstrate zu verbinden, umfassend das Auftragen einer bei Raumtemperatur härtbaren Klebstoffzusammensetzung auf zumindest eine solche Fläche, die Zusammensetzung bestehend aus (A) zumindest einem olefinisch ungesättigten Monomeren; (B) zumindest einem polymeren Material ausgewählt aus der Gruppe bestehend aus (1) zumindest einem olefinisch ungesättigten Urethanreaktionsprodukt zumindest eines isocyanatfunktionellen Prepolymeren und zumindest eines hydroxy-funktionellen Monomeren, das zumindest eine Einheit polymerisierbarer olefinischer Ungesättigtheit enthält, wobei ein solches Reaktionsprodukt dadurch charakterisiert ist, daß zumindest zwei Einheiten olefinischer Ungesättigtheit vorliegen und freie Isocyanatgruppen im wesentlichen abwesend sind; (2) zumindest einem elastomeren polymeren Material auf Butadienbasis ausgewählt aus der Gruppe bestehend aus (a) Homopolymerem aus Butadien; (b) Copolymerem aus Butadien und zumindest einem damit copolymerisierbaren Monomeren ausgewählt aus der Gruppe bestehend aus Styrol, Acrylnitril, Methacrylnitril und deren Mischungen; (c) modifiziertem elastomerem polymerem Material ausgewählt aus der Gruppe bestehend aus Butadien-Homopolymerem und Copolymerem wie zuvor definiert, wobei solche Homo- und Copolymeren modifiziert wurden durch Copolymerisation mit Spruenmengen bis zu 5 Gew.-% bezogen auf das Gewicht des modifizierten elastomeren Materials, von zumindest einem funktionellen Monomeren; und (d) Mischungen davon; (3) zumindest einem Polymer-im-Monomer-Sirup, im wesentlichen bestehend aus (a) 10 bis 98 Gew.-% zumindest einer olefinisch ungesättigten monomeren Verbindung, die zumindest eine

—C=C—Gruppe enthält;

(b) 2 bis 90 Gew.-% zumindest eines Polymeren, das von solchen (3)(a) Monomeren abgeleitet ist; (c) 0 bis 30 Gew.-% zumindest eines Polymeren, das die Gruppe $(CH_2CCl=CHCH_2)_n$ enthält, worin n eine ganze Zahl ist; wobei (3)(b) als partielles Polymerisationsprodukt von (3)(a) oder von (3)(a) in Gegenwart von (3)(c) vorliegt; die Mischungen von (3)(a) und (3)(b) oder von (3)(a), (3)(b) und (3)(c) ein Sirup eines Polymeren ist, das in unpolymerisiertem Monomerem gelöst oder dispergiert ist, wobei in diesem Sirup die Menge an von (3)(a) abgeleitetem (3)(b) zwischen 2 und 90% bezogen auf das Gesamtgewicht von (3)(a), (3)(b) und (3)(c) ist; (4) zumindest einem polymeren Material ausgewählt aus der Gruppe bestehend aus Polyvinylalkylether, Styrol-Acrylnitril-Harz, ungesättigtem Polyesterharz und deren Mischungen, wobei die Alkyleinheit solcher Ether 1 bis 8 Kohlenstoffatome enthält; (5) zumindest einem Homopolymeren oder Copolymeren zumindest eines olefinisch ungesättigten Monomeren ausgewählt aus einer Gruppe bestehend aus Styrol und Alkyl- oder Hydroxyalkylester von Acryl- und Methacrylsäure, wobei besagter Ester 1 bis 18 Kohlenstoffatome in der Alkyleinheit hat; (6) zumindest einen polymeren Material, das zumindest eine endständige olefinisch ungesättigte Gruppe hat, wobei besagtes polymeres Material ausgewählt wird aus der Gruppe bestehend aus (1) zumindest einem Addukt zumindest eines ethylenisch ungesättigten monofunktionellen Isocyanats und zumindest einer polymeren Substanz, die eine oder mehrere Einheiten aktiven Wasserstoffes enthält, ausgewählt aus der Gruppe bestehend aus

—OH, —$NH_2$, —NH— 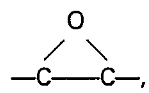 , —SH und —COOH;

und (2) zumindest einem Addukt zumindest eines reaktiven Monomeren, das zumindest eine endständige olefinisch ungesättigte Gruppe und zumindest eine reaktive Einheit ausgewählt aus der Gruppe bestehend aus

—OH, —$NH_2$, —NH—, 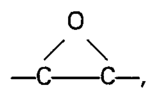 , —SH und —COOH

enthält, und zumindest eines polymeren Materials, das eine oder mehrere Einheiten enthält, die mit besagter reaktiver Einheit der besagten reaktiven Monomeren reaktiv sind, vorausgesetzt, daß wenn besagtes polymeres Material, besagte reaktive Einheit —OH ist, nicht eine reaktive —NCO-Gruppe enthält; und (7) Mischungen solcher polymerer Materialien; und (C) zumindest einer anorganischen oder organischen Verbindung eines Metallions, wobei besagtes Metallion ein Standardreduktionspotential im Bereich von +0,9 bis −0,5 hat; und (D) zumindest einer organischen schwefelhaltigen Verbindung, die zumindest eine —SH-Gruppe enthält oder eine tautomere Form hat, die zumindest eine —SH-Gruppe enthält; und (E) zumindest einer Persauerstoffverbindung ausgewählt aus der Gruppe bestehend aus Wasserstoffperoxid, organischen Peroxyestern und organischen Hydroperoxiden; und Anordnen der einander zugeordneten Flächen in aneinanderstoßender Weise, bis die Klebstoffzusammensetzung aushärtet, um die Verbindung besagter Flächen zu bewirken.

**Revendications**

1. Système catalyseur par oxydation-réduction à trois composants, caractérisé en ce qu'il consiste en 0,05 à 10 parties en poids d'au moins un hydroperoxyde organique; de 0,005 à 2 parties en poids d'au moins un thiol organique; et de 0,0005 à 1 partie en poids d'au moins un composé inorganique ou organique d'un métal ayant un potentiel de réduction standard compris dans la gamme de +0,9 à −0,5.

2. Système catalyseur suivant la revendication 1, caractérisé en ce que le thiol organique comprend l'acide mercaptosuccinique.

3. Système catalyseur suivant la revendication 1, caractérisé en ce que le composé métallique comprend le chlorure cuivrique.

4. Système catalyseur suivant la revendication 3, caractérisé en ce que le thiol organique comprend l'acide mercaptosuccinique.

5. Système catalyseur suivant la revendication 4, caractérisé en ce que l'hydroperoxyde comprend l'hydroperoxyde de cumène.

6. Composition adhésive acrylique caractérisée en ce qu'elle comprend

I. un premier composant comprenant

(A) au moins un monomère insaturé de manière oléfinique;

(B) au moins un matériau polymère choisi parmi le groupe consistant en

(1) au moins un produit de réaction uréthane insaturé de type oléfinique d'au moins un prépolymère isocyanate-fonctionnel et d'au moins un monomère hydroxy-fonctionnel ayant au moins une unité

d'insaturation de type oléfinique polymérisable, ce produit de réaction étant caractérisé par la présence d'au moins deux unités d'insaturation de type oléfinique et par l'absence substantielle de groupes isocyanates libres;

(2) au moins un matériau polymère élastomère à base de butadiène choisi parmi le groupe consistant en

(a) homopolymère de butadiène;

(b) copolymère de butadiène et au moins un monomère copolymérisable avec celui-ci, choisi parmi le groupe consistant en styrène, acrylonitrile, méthacrylonitrile et leurs mélanges;

(c) matériau polymère élastomère modifié choisi parmi le groupe consistant en homopolymère et copolymère de butadiène comme définis précédemment, cet homopolymère et ce copolymère ayant été modifiés par une copolymérisation par des quantités en traces s'élevant jusqu'à 5 pour cent en poids, sur base en poids du matériau élastomère modifié, d'au moins un monomère fonctionnel; et

(d) leurs mélanges;

(3) au moins un sirop polymère-dans-monomère consistant essentiellement en.

(a) de 10 à 98 pour cent en poids d'au moins un composé monomère insaturé de manière oléfinique ayant au moins un groupe

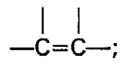

(b) de 2 à 90 pour cent en poids d'au moins un polymère dérivé des monomères tels que sous (3)(a);

(c) de zéro à 30 pour cent en poids d'au moins un polymère contenant le groupe $(CH_2CCl=CHCH_2)_n$, dans lequel n est un nombre entier;

dans lequel (3)(b) est présent en tant que produit de polymérisation partielle de (3)(a) ou de (3)(a) en présence de (3)(c); le mélange de (3)(a) et de (3)(b) ou de (3)(a), (3)(b) et (3)(c) étant un sirop du polymère dissous ou dispersé dans un monomère non polymérisé, sirop dans lequel la quantité de (3)(b) dérivé de (3)(a) est dans la gamme de 2 à 90 pour cent, sur base du poids total de (3)(a), (3)(b) et (3)(c);

(4) au moins un matériau polymère choisi parmi le groupe consistant en polyvinyl alkyl éther, résine d'acrylonitrile-styrène, résine de polyester insaturé et leurs mélanges, la fraction alkyle de cet éther contenant de 1 à 8 atomes de carbone;

(5) au moins un homopolymère ou copolymère d'au moins un monomère insaturé de manière oléfinique choisi parmi le groupe consistant en styrène et esters d'alkyle ou d'hydroxyalkyle d'acide acrylique et méthacrylique, cet ester ayant de 1 à 18 atomes de carbone dans la fraction alkyle;

(6) au moins un matériau polymère ayant un moins un groupe insaturé terminal du type oléfinique, ce matériau polymère étant choisi parmi le groupe consistant en (1) au moins un produit d'addition d'au moins un isocyanate monofonctionnel insaturé de manière éthylénique et au moins un polymère contenant une ou plusieurs fractions d'hydrogène actif choisies parmi le groupe consistant en

—OH, —$NH_2$, —NH—, 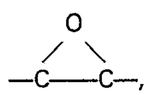 —SH et —COOH;

et (2) au moins un produit d'addition d'au moins un monomère réactif ayant au moins un groupe insaturé terminal de type oléfinique et au moins une fraction réactive choisie parmi le groupe consistant en

—OH, —$NH_2$, —NH—, 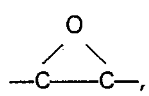 —SH et —COOH,

et au moins un matériau polymère qui contient une ou plusieurs fractions qui sont réactives avec cette fraction réactive du monomère réactif, à condition que, quand cette fraction réactive est —OH, le matériau polymère ne contienne pas un groupe —NCO réactif; et

(7) des mélanges de ces matériaux polymères; et

(C) au moins un composé inorganique ou organique d'un ion métallique, cet ion métallique ayant un potentiel de réduction standard compris dans la gamme de +0,9 à −0,5; et

II. un second composant comprenant

(A) au moins un monomère insaturé de manière oléfinique;

(B) au moins un matériau polymère choisi parmi le groupe consistant en

(1) au moins un produit de réaction uréthane insaturé de manière oléfinique d'au moins un prépolymère isocyanate-fonctionnel et d'au moins un monomère hydroxy-fonctionnel ayant au moins une unité d'insaturation de type oléfinique polymérisable, ce produit de réaction étant caractérisé par la présence d'au moins deux unités d'insaturation de type oléfinique et par l'absence substantielle de groupes isocyanates libres;

(2) au moins un matériau polymère élastomère à base de butadiène choisi parmi le groupe consistant en

(a) homopolymère de butadiène;

(b) copolymère de butadiène et au moins un monomère copolymérisable avec celui-ci choisi parmi le groupe consistant en styrène, acrylonitrile, méthacrylonitrile et leurs mélanges;

(c) un matériau polymère élastomère modifié choisi parmi le groupe consistant en homopolymère et copolymère de butadiène comme définis précédemment, cet homopolymère et ce copolymère ayant été modifiés par copolymérisation par des quantités en traces s'élevant jusqu'à 5 pour cent en poids, sur base en poids du matériau élastomère modifié, d'au moins un monomère fonctionnel; et

(d) leurs mélanges;

(3) au moins un sirop polymère-dans-monomère consistant essentiellement en

(a) de 10 à 98 pour cent en poids d'au moins un composé monomère insaturé de manière oléfinique ayant au moins un groupe

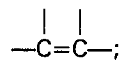

(b) de 2 à 90 pour cent en poids d'au moins un polymère défivé des monomères tels que sous (3)(a);

(c) de zéro à 30 pour cent en poids d'au moins un polymère contenant le groupe $(CH_2CCl{=}CHCH_2)_n$, dans lequel n est un nombre entier;

dans lequel (3)(b) est présent en tant que produit de polymérisation partielle de (3)(a) ou de (3)(a) en présence de (3)(c); le mélange de (3)(a) et de (3)(b) ou de (3)(a), (3)(b) et (3)(c) étant un sirop de polymère dissous ou dispersé dans un monomère non polymérisé, sirop dans lequel la quantité de (3)(b) dérivé de (3)(a) est dans la gamme de 2 à 90 pour cent, sur base du poids total de (3)(a), (3)(b) et (3)(c);

(4) au moins un matériau polymère choisi parmi le groupe consistant en polyvinyl alkyl éther, résine de styrène-acrylonitrile, résine de polyester insaturé et leurs mélanges, la fraction alkyle de cet éther contenant de 1 à 8 atomes de carbone;

(5) au moins un homopolymère ou copolymère d'au moins un monomère insaturé de manière oléfinique choisi parmi le groupe consistant en styrène et esters d'alkyle ou d'hydroxyalkyle d'acide acrylique et méthacrylique, cet ester ayant de 1 à 18 atomes de carbone dans la fraction alkyle;

(6) au moins un matériau polymère ayant au moins un groupe insaturé terminal de type oléfinique, ce matériau polymère étant choisi parmi le groupe consistant en (1) au moins un produit d'addition d'au moins un isocyanate monofonctionnel insaturé de manière éthylénique et au moins un polymère contenant une ou plusieurs fractions d'hydrogène actif choisies parmi le groupe consistant en

—OH, $—NH_2$, —NH—, 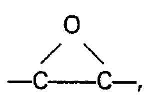, —SH et —COOH;

et (2) au moins un produit d'addition d'au moins un monomère réactif ayant au moins un groupe insaturé terminal du type oléfinique et au moins une fraction réactive choisie parmi le groupe consistant en

—OH, $—NH_2$, —NH—, 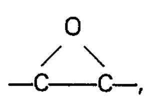, —SH et —COOH,

et au moins un matériau polymère qui contient une ou plusieurs fractions qui sont réactives avec cette fraction réactive du monomère réactif, à condition que, quand cette fraction réactive est —OH, le matériau polymère ne contienne pas un groupe —NCO réactif;

(7) des mélanges de ces matériaux polymères;

(C) au moins un composé contenant du soufre organique ayant au moins un groupe —SH ou ayant une forme tautomère contenant au moins un groupe —SH; et

(D) au moins un composé peroxygène choisi parmi le groupe consistant en peroxyde d'hydrogène, peroxyesters organiques et hydroperoxydes organiques;

et dans laquelle le volume ou le poids, respectivement, de ce premier composant est substantiellement égal au volume ou au poids, respectivement, du second composant, au moment où ces composants sont mélangés.

7. Composition adhésive acrylique suivant la revendication 6, caractérisée en ce qu'elle contient jusqu'à 10 pour cent en poids d'un composé organique contenant au moins un groupe hydroxyle.

8. Composition adhésive acrylique suivant la revendication 6, caractérisée en ce qu'elle contient jusqu'à 2 pour cent en poids d'eau.

9. Composition adhésive acrylique suivant la revendication 7, caractérisée en ce qu'elle contient jusqu'à 2 pour cent en poids d'eau.

10. Composition adhésive suivant la revendication 6, caractérisée en ce que le composé contenant du soufre organique est l'acide mercaptosuccinique.

11. Composition adhésive suivant la revendication 6, caractérisée en ce que le composé contenant un ion métallique est le chlorure cuivrique.

12. Composition adhésive suivant la revendication 11, caractérisée en ce que le composé contenant du soufre organique est l'acide mercaptosuccinique.

13. Composition adhésive suivant la revendication 12, caractérisée en ce qu'elle contient jusqu'à 10 pour cent en poids d'un composé organique contenant au moins un groupe hydroxyle.

14. Composition adhésive suivant la revendication 12, caractérisée en ce qu'elle contient jusqu'à 2 pour cent en poids d'eau.

15. Composition adhésive suivant la revendication 13, caractérisée en ce qu'elle contient jusqu'à 2 pour cent en poids d'eau.

16. Procédé pour la fixation de surfaces appariées de deux ou plusieurs substrats métalliques, caractérisé en ce qu'il comprend l'application sur au moins une des surfaces d'une composition adhésives durcissable à température ambiante, comprenant

(A) au moins un monomère insaturé de manière oléfinique;

(B) au moins un matériau polymère choisi parmi le groupe consistant en

(1) au moins un produit de réaction uréthane insaturé de type oléfinique d'au moins un prépolymère isocyanate-fonctionnel et d'au moins un monomère hydroxy-fonctionnel ayant au moins une unité d'insaturation de type oléfinique polymérisable, ce produit de réaction étant caractérisé par la présence d'au moins deux unités d'insaturation de type oléfinique et par l'absence substantielle de groupes isocyanates libres;

(2) au moins un matériau polymère élastomère à base de butadiène choisi parmi le groupe consistant en

(a) homopolymère de butadiène;

(b) copolymère de butadiène et au moins un monomère copolymérisable avec celui-ci, choisi parmi le groupe consistant en styrène, acrylonitrile, méthacrylonitrile et leurs mélanges;

(c) matériau polymère élastomère modifié choisi parmi le groupe consistant en homopolymère et copolymère de butadiène comme définis précédemment, cet homopolymère et ce copolymère ayant été modifiés par une copolymérisation par des quantités en traces s'élevant jusqu'à 5 pour cent en poids, sur base en poids du matériau élastomère modifié, d'au moins un monomère fonctionnel; et

(d) leurs mélanges;

(3) au moins un sirop polymère-dans-monomère consistant essentiellement en

(a) de 10 à 98 pour cent en poids d'au moins un composé monomère insaturé de manière oléfinique ayant au moins un groupe

$$-\overset{|}{C}=\overset{|}{C}-;$$

(b) de 2 à 90 pour cent en poids d'au moins un polymère dérivé des monomères tels que sous (3)(a);

(c) de zéro à 30 pour cent en poids d'au moins un polymère contenant le groupe $(CH_2CCl=CHCH_2)_n$, dans lequel n est un nombre entier;

dans lequel (3)(b) est présent en tant que produit de polymérisation partielle de (3)(a) ou de (3)(a) en présence de (3)(c); le mélange de (3)(a) et de (3)(b) ou de (3)(a), (3)(b) et (3)(c) étant un sirop du polymère dissous ou dispersé dans un monomère non polymérisé, sirop dans lequel la quantité de (3)(b) dérivé de (3)(a) est dans la gamme de 2 à 90 pour cent, sur base du poids total de (3)(a), (3)(b) et (3)(c);

(4) au moins un matériau polymère choisi parmi le groupe consistant en polyvinyl alkyl éther, résine d'acrylonitrile-styrène, résine de polyester insaturé et leurs mélanges, la fraction alkyle de cet éther contenant de 1 à 8 atomes de carbone;

(5) au moins un homopolymère ou copolymère d'au moins un monomère insaturé de manière oléfinique choisi parmi le groupe consistant en styrène et esters d'alkyle ou d'hydroxyalkyle d'acide acrylique et méthacrylique, cet ester ayant de 1 à 18 atomes de carbone dans la fraction alkyle;

(6) au moins un matériau polymère ayant au moins un groupe insaturé terminal de type oléfinique, ce matériau polymère étant choisi parmi le groupe consistant en (1) au moins un produit d'addition d'au moins un isocyanate monofonctionnel insaturé de manière éthylénique et au moins un polymère contenant une ou plusieurs fractions d'hydrogène actif choisies parmi le groupe consistant en

$$-OH,\ -NH_2,\ -NH-,\ -\overset{\overset{O}{\diagup\ \diagdown}}{C\text{---}C}-,\ -SH \text{ et } -COOH;$$

et (2) au moins un produit d'addition d'au moins un monomère réactif ayant au moins un groupe insaturé terminal de type oléfinique et au moins une fraction réactive choisie parmi le groupe consistant en

$$-OH,\ -NH_2,\ -NH-,\ -\overset{\overset{O}{\diagup\ \diagdown}}{C\text{---}C}-,\ -SH \text{ et } -COOH,$$

et au moins un matériau polymère qui contient une ou plusieurs fractions qui sont réactives avec cette

fraction réactive du monomère réactif, à condition que, quand cette fraction réactive est —OH, le matériau polymère ne contienne pas un groupe —NCO réactif; et

(7) des mélanges de ces matériaux polymères; et

(C) au moins un composé inorganique ou organique d'un ion métallique, cet ion métallique ayant un potentiel de réduction standard compris dans la gamme de +0,9 à −0,5;

(D) au moins un composé contenant du soufre organique ayant au moins un groupe —SH ou ayant une forme tautomère contenant au moins un groupe —SH; et

(E) au moins un composé peroxygène choisi parmi le groupe consistant en peroxyde d'hydrogène, peroxyesters organiques et hydroperoxydes organiques;

et en ce qu'on place les surfaces appariées en contact étroit jusqu'à ce que la composition adhésive durcisse afin d'effectuer la fixation de ces surfaces.